# EUROPEAN PATENT APPLICATION

(11) **EP 3 252 701 A1**
(43) Date of publication of application: **06.12.2017**
(21) Application number: 16743431.5
(22) Date of filing: 27.01.2016
(51) Int. Cl.: G06Q 50/14, G06Q 10/10, G06Q 50/30

(54) **RISK INFORMATION DISTRIBUTION DEVICE AND RISK INFORMATION DISTRIBUTION METHOD**

(30) Priority: 29.01.2015 JP 2015015981
(71) Applicant: JTB Corp., Tokyo 140-0002 (JP)
(72) Inventor: TANIGUCHI, Kunihiko, Tokyo 140-8602 (JP); FUJITA, Mitsuru, Tokyo 140-8602 (JP); YASUDA, Yukio, Tokyo 140-8602 (JP); TANABE, Ryogaku, Tokyo 140-8602 (JP); TOMITA, Takahiro, Tokyo 140-8602 (JP)
(74) Representative: Grünecker Patent- und Rechtsanwälte PartG mbB
(86) International application number: PCT/JP2016/052377
(87) International publication number: WO 2016/121828

(57) **Abstract**

Provided are a risk information distribution device and a risk information distribution method capable of accurately and efficiently distributing, to a traveler, necessary risk information corresponding to a current location and future schedule of the traveler and capable of distributing the risk information to a manager in a manner that allows to quickly and accurately grasp the safety of the traveler. A device 1 includes, as main constituent elements, an itinerary information acquisition processing unit 31, a risk information acquisition processing unit 32, a risk information determination processing unit 33, a risk information notification processing unit 34, a position information acquisition processing unit 35, a position information collation processing unit 36, a decision result display processing unit 37, an abnormality notification processing unit 38, a safety confirmation notification processing unit 39, and an position information confirmation processing unit 40. Further, the device 1 includes an itinerary information database 21 that stores itinerary information, a risk information database 22 that stores the risk information, a position information database 23 that stores position information of a portable information terminal 2, a notification history information database 24 that stores history of alert distribution, and the like.

## Description

### TECHNICAL FIELD

The present invention relates to a risk information distribution device and a risk information distribution method for distributing risk information including information on overseas public safety, a disaster, etc. to a traveler and a manager who manages the behavior of the traveler.

Many people have been traveling abroad for the purposes of an overseas trip, an overseas business trip, an overseas assignment, etc. regardless of private or business. Their destination countries sometimes include dangerous countries and regions where public safety has been compromised or a disaster has occurred. Information regarding such overseas public safety, disaster, etc. (the risk information) has been officially announced as needed by a government organization, a risk management consulting company, etc. and the traveler is recommended to refer to the risk information in advance to confirm the safety of the destination country. Further, the risk information is commonly shared by a travel agency selling an overseas trip, a company appointing an overseas business trip and an overseas assignment, etc.

In particular, an insurance, a rescue operation, etc. are measures taken after a damage has actually occurred, however, from a risk management perspective, it is important not to encounter a danger, that is, to prevent the occurrence of a risk in advance. The countermeasure cost for preventing the occurrence of a risk in advance is often much lower than a damage would cost after the risk has actually occurred in terms of money. Thus, there is widely desired a risk information distribution system capable of accurately analyzing and appropriately distributing danger information to prevent the occurrence of the risk in advance.

Various systems have been developed for distributing the risk information described above to the traveler, etc.

For example, Patent Literature 1 discloses a technique in which safety and hygiene information are gathered and stored in a data server, and, upon request from an overseas employee terminal or an overseas employee's family terminal, the requested safety and hygiene information is extracted from the entire safety and hygiene information stored in the data server and sent to the overseas employee terminal or the overseas employee's family terminal through an internet.

Further, Patent Literature 2 discloses a technique in which safety information and disaster information are gathered from specific organizations at home and overseas, and safety information is also gathered from a user who has visited an actual place. In this technique, the reliability of the safety information thus gathered is calculated and only the safety information of which the reliability is equal to or greater than a predetermined value is provided to the user.

Further, Patent Literature 3 discloses a technique in which, when danger information is received from an information terminal of a traveler, other travelers staying in a danger occurring area are identified and information for specifying a category of danger and the danger occurring area is sent to information terminals of the identified travelers.

### CITATION LIST

### PATENT LITERATURE

PATENT LITERATURE 1: JP 2005-128612 A
PATENT LITERATURE 2: JP 2008 - 59251 A
PATENT LITERATURE 3: JP 2011- 211569 A

### SUMMARY OF INVENTION

### TECHNICAL PROBLEM

However, the systems described in Patent Literature 1 and Patent Literature 2 cannot distribute information corresponding to each traveler in pinpoint accuracy. For example, in many cases, a destination country generally recognized as a safe country includes a certain region or the like with a high degree of danger, and conversely, a country recognized as a dangerous country includes a certain region or the like with safety. Thus, distribution of further accurate information requires pinpoint accuracy defined by not a country level, but by a fine region level of the country.

Further, the system described in Patent Literature 3 constantly acquires current location information of a terminal of a traveler by GPS or the like and distributes information by specifying the current location of the traveler. Thus, this system can respond to danger at the current location of the traveler (at the present time), but fails to predict danger according to a traveler' s future schedule. That is, this system can call for attention to advise the traveler to leave from a dangerous area, which is an actual current location of the traveler determined by GPS or the like, however, when a future travel-scheduled area turns into a dangerous situation, this system is insufficient for preventing the danger in advance since the traveler is excluded from being a distribution target until the traveler reaches the dangerous area (until it is determined that the traveler is located in that actual region) . Further, the traveler tends not to prefer this system in terms of a personal information management since the system constantly acquires logs 24 hours a day by GPS or the like to manage the current location information of the traveler.

On the other hand, as the overseas business travelers and the employees living overseas increase, the companies have greater obligations of considering safety of the employees, and the load of work put on a manager who manages the behavior and safety of the overseas business travelers and the employees living overseas continues to increase. However, a conventional system does not allow to quickly and accurately grasp the behavior and safety of the traveler to be checked.

For example, the current location of the traveler can be confirmed by GPS or the like described above, however, the current location of the traveler needs to be collated with a dangerous area indicated by danger information each time. Further, it is difficult to accurately grasp why the traveler is there, whether the traveler is currently in danger, if in danger, when the travelers is actually brought into a dangerous situation, etc.

Further, constantly acquiring logs 24 hours a day by GPS or the like requires a manager to constantly monitor the logs 24 hours a day. That is, in order for a company to accurately grasp the behavior of the traveler, a manager needs to continuously monitor the current location of the traveler and compare the current location with information on a dangerous area, etc., such as a travel schedule table and a business trip application form. Thus, the load of the manager is extremely large.

As described above, collecting and analyzing the danger information requires a 24-hour management and it is necessary to check if there is any traveler in a corresponding area each time the danger information is obtained even in the middle of the night. This also puts more troublesome work on the manager. In particular, an initial response is most important for a risk management. However, the conventional system takes too much time to carry out procedures from obtaining the danger information to confirming safety of the traveler and sometimes fails to perform safety confirmation on time. Further, it is also necessary to give a behavior instruction for evacuating from the danger to the traveler staying in the corresponding area in addition to confirming the safety. That is, the manager needs to give an appropriate instruction for evacuating from the danger to the traveler after considering a measure, etc. on a case-by-case basis each time. This also puts more work on the manager.

For example, when the danger information on, for example, the occurrence of a terrorism in some city in some country is acquired, it is first necessary to examine which area of the country the city described in the danger information is located by searching on a map, etc. Further, if the city name is written in katakana in the obtained danger information, it is sometimes necessary to find the city name in English, thereby causing more troublesome work. Once the location is determined, it is then necessary to confirm if the location is in an area of a local office. Further, it is necessary to determine a danger degree by individually confirming the cities described in the travel schedule table and the business trip application form of the employee and measuring the distance of the cities from the area included in the danger information. It is also necessary to prepare a list of persons concerned and look up their contact information. Then, after completing the above procedures, the safety confirmation of the traveler can be finally initiated. Further, in confirming safety, subsequently, it is sometimes further necessary to follow up on a non-responding traveler by making a re-call, etc. Further, simultaneously with the safety confirmation, or before or after the safety confirmation, it is also necessary to give an appropriate instruction for evacuating from the danger to the traveler. As described above, confirming the safety of the traveler requires a lot of time and labor, and taking too much time may cause a situation of being too late to do something.

The present invention has been made in view of the foregoing problems, and an object of the present invention is to provide a risk information distribution device and a risk information distribution method capable of accurately and efficiently distributing, to a traveler, necessary risk information corresponding to a current location and a future schedule of the traveler. Further, another object of the present invention is to provide a risk information distribution device and a risk information distribution method capable of distributing the risk information to a manager in a manner that allows the manager to quickly and accurately grasp the safety of the traveler.

### SOLUTION TO PROBLEM

According to an embodiment of the present invention, the above problems can be solved by a risk information distribution device configured from a computer that is communicatively connected to an information terminal and includes at least a storage unit and an arithmetic unit, in which the computer includes:
an itinerary information storage section that stores, in the storage unit, itinerary information in which an itinerary of a traveler is created or acquired from an outside and a longitude and latitude are imparted to each event included in the itinerary;
a risk information storage section that stores, in the storage unit, risk information in which danger information including information on public safety or a disaster is acquired from an outside and the longitude and latitude are imparted to the danger information;
a risk information determining section that compares the longitude and latitude of the itinerary information and the longitude and latitude of the risk information and determines whether the two longitudes and latitudes are the same or an error between the two longitudes and latitudes is within a range of a predetermined distance preset for each of the risk information; and
a risk information notifying section that notifies a content indicated by the risk information to the information terminal held by the traveler associated with the corresponding itinerary information, when the risk information determining section determines the existence of the itinerary information having the longitude and latitude which is the same as that of the risk information or of which the error from that of the risk information is within the predetermined distance range.

Further, according to another embodiment of the present invention, the above problems can be solved by a risk information distribution method executed by a computer that is communicatively connected to an information terminal and includes at least a storage unit and an arithmetic unit, in which the computer executes:
an itinerary information storage step for storing, in the storage unit, itinerary information in which an itinerary of a traveler is created or acquired from an outside and a longitude and latitude are imparted to each event included in the itinerary;
a risk information storage step for storing, in the storage unit, risk information in which danger information including information on public safety or a disaster is acquired from an outside and the longitude and latitude are imparted to the danger information;
a risk information determining step for comparing the longitude and latitude of the itinerary information and the longitude and latitude of the risk information and determining whether the two longitudes and latitudes are the same or an error between the two longitudes and latitudes is within a range of a predetermined distance preset for each of the risk information; and
a risk information notifying step for notifying a content indicated by the risk information to the information terminal held by the traveler associated with the corresponding itinerary information, when the risk information determining step determines the existence of the itinerary information having the longitude and latitude which is the same as that of the risk information or of which the error from that of the risk information is within the predetermined distance range.

As described above, when the longitude and latitude of the itinerary information of each traveler and the longitude and latitude of the risk information are compared and it is determined that the two longitudes and latitudes are the same or the error between the two longitudes and latitudes is within the predetermined distance range preset according to a category and a danger level of the risk information, the content indicated by the risk information is notified to the information terminal held by the traveler associated with the corresponding itinerary information (alert distribution). This allows to accurately and efficiently distribute the necessary risk information corresponding to each traveler according to an itinerary of the traveler.

Further, a future behavior of the traveler can be predicted from the itinerary, thus it is possible to accurately and efficiently distribute the necessary risk information not only on the present schedule but also on the future schedule, that is, on a country and a region where the traveler is scheduled to stay in the future. This allow the traveler to confirm the risk information before departure, thereby increasing the probability of preventing the risk in advance.

Further, there are many countries and regions where a communication environment is unstable in overseas, however, the present invention allows a certain level of safety measure without depending on a communication environment. That is, even when position information is not available via GPS or the like, it is possible to identify the traveler corresponding to a distribution destination of the risk information based on the itinerary information. Further, the risk information is distributed based on the registered itinerary information regardless of a communication environment, thus the traveler traveling in a country or a region where a network is not always accessible can confirm the risk information in advance, for example, when registering the itinerary information. Further such a traveler can confirm the necessary risk information by receiving the risk information and accessing to and browsing information updated in a database once the network becomes accessible.

In particular, the itinerary information and the risk information include information on a coordinate, that is, a longitude and latitude, and a distribution destination is selected by comparing these longitudes and latitudes, thus it is possible to accurately and efficiently distribute the necessary risk information corresponding to each traveler more in detail and accurately.

Further, the traveler can perform a risk check on a travel destination in advance using the risk information distributed according to the registered itinerary. On the other hand, since the itinerary of the traveler is registered in advance as the itinerary information, the manager can quickly and accurately grasp the safety of the traveler without a need to take the trouble of collating a location where the traveler stays and the dangerous area indicated by the risk information and a need to consider the reason the traveler stays in that location. Further, when the content indicated by the risk information (alert) to be distributed includes in advance a measure, an advice, etc. for evacuating from the danger, the manager can give a behavior instruction for evacuating from the danger to the traveler together with alert distribution without a need to examine the measure each time and give an additional instruction to the corresponding traveler. Further, automatically registering the itinerary information can eliminate a cumbersome operation, such as individually registering the itinerary of each traveler each time.

Further, according to another embodiment of the present invention, the above problems can be solved by the risk information distribution device, in which:
the computer further includes:
   a position information acquiring section that acquires position information indicating the longitude and latitude of the information terminal held by the traveler in an occurrence time zone of the event and stores the position information in the storage unit; and
   a position information collating section that compares the longitude and latitude in the occurrence time zone of the event, included in the corresponding itinerary information, and the longitude and latitude of the position information, and determines whether the two longitudes and latitudes are the same or the error between the two longitudes and latitudes is within a range of a preset allowable distance, and
when the position information collating section determines that the itinerary information has the same longitude and latitude as that of the position information or the error between the two longitudes and latitudes is within the allowable distance range, the risk information determining section compares the longitude and latitude of the itinerary information or the position information and the longitude and latitude of the risk information, and determines whether the two longitudes and latitudes are the same or the error between the two longitudes and latitudes is within the predetermined distance range.

Further, according to another embodiment of the present invention, the above problems can be solved by the risk information distribution method, in which:
the computer further executes:
   a position information acquiring step for acquiring position information indicating the longitude and latitude of the information terminal held by the traveler in an occurrence time zone of the event and storing the position information in the storage unit; and
   a position information collating step for comparing the longitude and latitude in the occurrence time zone of the event, included in the corresponding itinerary information, and the longitude and latitude of the position information, and determining whether the two longitudes and latitudes are the same or the error between the two longitudes and latitudes is within a range of a preset allowable distance, and
when the position information collating step determines that the itinerary information has the same longitude and latitude as that of the position information or the error between the two longitudes and latitudes is within the allowable distance range, the risk information determining step compares the longitude and latitude of the itinerary information or the position information and the longitude and latitude of the risk information, and determines whether the two longitudes and latitudes are the same or the error between the two longitudes and latitudes is within the predetermined distance range.

As described above, the distribution destination of the risk information is selected after acquiring, in addition to the itinerary information, the position information indicating the longitude and latitude of the information terminal held by the traveler in the occurrence time zone of the events (several minutes before and after scheduled time of the events) included in the itinerary information, such as arriving at and departing from an airport, arriving at and departing from an accommodation facility, and an appointment, collating the longitude and latitude of the itinerary information and the longitude and latitude of the position information, and determining whether the traveler is within a range of an acceptable distance (an allowable distance) to an extent that allows to recognize that the traveler is at a site indicated by the itinerary information. Thus, it is possible to more accurately and efficiently distribute the necessary risk information corresponding to each traveler. In particular, as for the risk information at the present time, the necessary information can be efficiently distributed with more pinpoint accuracy. Further, the risk information can be distributed while coping with a sudden change in the itinerary (a change in the schedule) caused at the destination.

Further, acquiring the position information in each occurrence time zone of the preset events of the itinerary information, such as arrival and departure time at an airport, arrival and departure time at an accommodation facility, and appointment time, allows by itself to determine whether the traveler behaves according to the itinerary and confirm the behavior and safety of the traveler. Thus, acquiring the position information in association with the itinerary information can eliminate a need for continuous monitoring by GPS or the like, thereby reducing the processing load of the system, and protect personal information in consideration of the privacy of the traveler.

Further, according to another embodiment of the present invention, the above problems can be solved by the risk information distribution device, in which the risk information storage section, upon acquiring the danger information, collates a content of the danger information and the content of the risk information stored in the storage unit, and rewrites and stores the risk information when the contents of specific items included in the danger information and the risk information are different.

Further, according to another embodiment of the present invention, the above problems can be solved by the risk information distribution method, in which, the risk information storage step, upon acquiring the danger information, collates a content of the danger information and the content of the risk information stored in the storage unit, and rewrites and stores the risk information when the contents of specific items included in the danger information and the risk information are different.

As described above, upon acquisition of the danger information, the newly acquired danger information is collated with the existing risk information. When there is any change in the content of the specific item indicating, for example, when, where, or what kind of event occurs, the content of the risk information is rewritten and updated to the content of the newly acquired danger information. This can keep the risk information in the latest and accurate condition at all times and prevent the risk information from being redundantly created multiple times for the danger information indicating the same event.

In particular, when the danger information is distributed multiple places, the multiple pieces of danger information indicating the same event often overlap. When the traveler is notified with all multiple pieces of danger information as the risk information, the traveler may be confused or find it annoying to confirm the risk information, thus it is rather questionable to reduce the risk in this manner. Removing duplication by organizing the danger information and examining the presence of changes, etc. in advance allows to more accurately and efficiently distribute the risk information.

Note that it is preferable that the risk information includes an item indicating an effective period of the risk information and the risk information determining section determines whether a date and time indicated by the itinerary information is within the effective period.

Further, it is preferable that the risk information includes an item indicating an effective period of the risk information and the risk information determining step determines whether a date and time indicated by the itinerary information is within the effective period.

In this configuration, the risk information includes information on the effective period indicating a period from the initiation of effectiveness to the expiration of effectiveness of the risk information. Then, it is determined whether the date and time indicated by the itinerary information is within the effective period. If it is within the effective period, the traveler of the itinerary information is to be the distribution destination. In this manner, it is possible to accurately and efficiently distribute the necessary risk information corresponding to each traveler more accurately.

Further, according to another embodiment of the present invention, the above problems can be solved by the risk information distribution device, in which:
the information terminal includes an information terminal for manager operated by a manager;
the computer further includes a management information sending section that sends at least information for identifying the traveler, the itinerary information, and the risk information to the information terminal for manager; and
the management information sending section displays:
   a traveler mark indicating a staying location of the traveler, which is specified based on the longitude and latitude included in the itinerary information, in a manner that can distinguish among past, present, and future; and
   a dangerous area mark indicating a dangerous area specified based on the longitude and latitude included in the risk information in a manner that can distinguish among danger levels on a map displayed on a screen of the information terminal for manager.

In particular, when the risk information determining section determines that the itinerary information has the same longitude and latitude as that of the risk information or the error between the two longitudes and latitudes is within the predetermined distance range, the management information sending section preferably displays the traveler mark and the dangerous area mark in an approximately same area of the map in an overlapping manner. Further, the risk information notifying section preferably indicates the traveler mark in a manner that distinguishes the traveler who has been notified with the content indicated by the risk information and the traveler who has not been notified. Further, the management information sending section preferably collectively sends multiple pieces of information for each period divided by a predetermined time.

Further, according to another embodiment of the present invention, the above problems can be solved by the risk information distribution method, in which:
the information terminal includes an information terminal for manager operated by a manager;
the computer further executes a management information sending step for sending at least information for identifying the traveler, the itinerary information, and the risk information to the information terminal for manager; and
the management information sending step displays:
   a traveler mark indicating a staying location of the traveler, which is specified based on the longitude and latitude included in the itinerary information, in a manner that can distinguish among past, present, and future; and
   a dangerous area mark indicating a dangerous area specified based on the longitude and latitude included in the risk information in a manner that can distinguish among danger levels on a map displayed on a screen of the information terminal for manager.

In particular, when the risk information determining step determines that the itinerary information has the same longitude and latitude as that of the risk information or the error between the two longitudes and latitudes is within the predetermined distance range, the management information sending step preferably displays the traveler mark and the dangerous area mark in an approximately same area of the map in an overlapping manner. Further, the risk information notifying step preferably indicates the traveler mark in a manner that distinguishes the traveler who has been notified with the content indicated by the risk information and the traveler who has not been notified. Further, the management information sending step preferably collectively sends multiple pieces of information for each period divided by a predetermined time.

As described above, the traveler mark indicating the staying location of the traveler, which is specified based on the longitude and latitude included in the itinerary information, in a manner that can distinguish among past, present, and future, and the dangerous area mark indicating the dangerous area specified based on the longitude and latitude included in the risk information in a manner that can distinguish among danger levels are displayed on the map displayed on the screen of the information terminal for manager. In this manner, the manager can easy see where the traveler is or scheduled to be, where the dangerous area is, etc., for grasping a situation at a glance. Thus, the manager can quickly and accurately grasp the safety of the traveler.

Further, the traveler mark is displayed as an icon formed into a shape of a person and distinguishably displayed according to at least three time zones of the past, the present, and the future, for example, by a color code or the like, to improve visibility. Further, the dangerous area mark is distinguishably displayed according to danger degrees of the risk information by a color code or the like to improve visibility.

Further, when it is determined that the itinerary information has the same longitude and latitude as that of the risk information or the error between the two longitudes and latitudes is within the predetermined distance range, the traveler mark and the dangerous area mark are displayed in the approximately same area of the map in an overlapping manner. This allows the manager to easily see and grasp a situation at a glance and to quickly and accurately grasp the safety of the traveler. In particular, this eliminates a need to take the trouble of collating the staying location of the traveler and the dangerous area indicated by the risk information and allows to accurately grasp whether the traveler is currently in danger, if in danger, when the traveler is actually brought into a dangerous situation, etc. on one screen.

Further, the traveler mark indicating the traveler who has been notified with the risk information is distinguishably displayed from the traveler mark indicating the traveler who has not been notified by highlighting the former in different color, shape, or the like. This allows the manager to grasp which travelers the alert is distributed at a glance and to quickly and accurately grasp the safety of the traveler. The initial response is most important for the risk management. This configuration allows the manager to take swift actions from the acquisition of the danger information to the safety confirmation of the traveler. In particular, a series of procedures from confirming the location of the traveler giving no reply to making a dispatch request to a local rescue service are performed smoothly.

Further, the multiple pieces of information are collectively sent with one mail or the like at prescribed time intervals (e.g., 5 minutes) . Thus, even when there are too many travelers, this configuration prevents the manager from being late for recognizing a dangerous situation because of too many mails to be distributed.

Further, according to another embodiment of the present invention, the above problems can be solved by the risk information distribution device, in which:
the information terminal includes the information terminal for manager operated by the manager; and
when the position information collating section determines that the longitude and latitude of the itinerary information is not the same as that of the position information or the error between the two longitudes and latitudes is not within the allowable distance range, the computer further includes:
   an abnormality notifying section that sends information for identifying the traveler associated with the corresponding itinerary information to the information terminal for manager; and
   a safety confirmation notifying section that sends information for confirming safety to the information terminal held by the traveler associated with the corresponding itinerary information or other information terminal associated with the traveler. Further, the abnormality notifying section preferably collectively sends multiple pieces of information for each period divided by a predetermined time.

Further, according to another embodiment of the present invention, the above problems can be solved by the risk information distribution method, in which:
the information terminal includes the information terminal for manager operated by the manager; and
when the position information collating step determines that the longitude and latitude of the itinerary information is not the same as that of the position information or the error between the two longitudes and latitudes is not within the allowable distance range, the computer further executes:
   an abnormality notifying step for sending information for identifying the traveler associated with the corresponding itinerary information to the information terminal for manager; and
   a safety confirmation notifying step for sending information for confirming safety to the information terminal held by the traveler associated with the corresponding itinerary information or other information terminal associated with the traveler. Further, the abnormality notifying step preferably collectively sends multiple pieces of information for each period divided by a predetermined time.

As described above, the itinerary information and the current position information are collated for each event or the like recorded in the itinerary. When it is determined that the longitude and latitude of the itinerary information is not the same as that of the position information or the error between the two longitudes and latitudes is not within the allowable distance range, that is, when the actual current location of the traveler does not match with a location scheduled in the itinerary and the traveler does not behave as scheduled, it is determined that some abnormality occurs and the manager is notified with information for identifying such a traveler. This allows the manager to timely grasp a possibility that the traveler may be in danger and confirm when the traveler is brought into a dangerous situation. Thus, the manger can more quickly and accurately grasp the safety of the traveler. In particular, a series of procedures from confirming the location of the traveler giving no reply to making a dispatch request to a local rescue service are performed smoothly.

Further, a quick initial response can be achieved by confirming safety to the traveler, or a hotel, an office, or the like related to the traveler included in the itinerary information.

Further, the multiple pieces of information are collectively sent with one mail or the like at the prescribed time intervals (e.g., 5 minutes). Thus, even when there are too many travelers, the manager can be prevented, for example, from being late for recognizing a dangerous situation because of too many mails to be distributed.

### ADVANTAGEOUS EFFECTS OF INVENTION

According to the risk information distribution device and the risk information distribution method of the present invention, it becomes possible to accurately and efficiently distribute, to the traveler, the necessary risk information corresponding to the current location and the future schedule of the traveler. It also becomes possible to distribute the risk information to the manager in a manner that allows the manager to quickly and accurately grasp the safety of the traveler.

### BRIEF DESCRIPTION OF DRAWINGS

FIG. 1 is an overall view schematically illustrating a system including a risk information distribution device of the present invention.
FIG. 2 is a block diagram illustrating a hardware configuration of the risk information distribution device of the present invention.
FIG. 3 is a functional configuration diagram of the risk information distribution device of the present invention.
FIG. 4 is a diagram illustrating an example of an itinerary information table.
FIG. 5 is a diagram illustrating an example of a risk information record.
FIG. 6 is a diagram illustrating an example of the risk information record.
FIG. 7 is a diagram illustrating an example of the risk information records which are continuously distributed.
FIG. 8 is a diagram illustrating an example of a position information record.
FIG. 9 is a flowchart illustrating procedures of risk information acquisition processing.
FIG. 10 is a table illustrating an example of distributing risk information by linking itinerary information with position information.
FIG. 11 is a diagram illustrating an example of a transition of display screens of a portable information terminal.
FIG. 12 is a diagram illustrating an example of the display screen of the portable information terminal.
FIG. 13 is a diagram illustrating an example of a transition of the display screens of the portable information terminal.
FIG. 14 is a diagram illustrating an example of a transition of the display screens of the portable information terminal.
FIG. 15 is a diagram illustrating an example of a display screen of an information terminal for manager.
FIG. 16 is an enlarged view of essential part of the display screen of the information terminal for manager.
FIG. 17 is an explanatory diagram schematically illustrating a risk fence function.
FIG. 18 is a flowchart illustrating procedures of risk information distribution processing.
FIG. 19 is a flowchart illustrating procedures of risk information determination processing.
FIG. 20 is a flowchart illustrating procedures of the risk information determination processing.
FIG. 21 is a flowchart illustrating procedures of the risk information distribution processing.
FIG. 22 is a flowchart illustrating procedures of position information collation processing.
FIG. 23 is a flowchart illustrating procedures of the risk information determination processing.
FIG. 24 is a flowchart illustrating procedures of the risk information determination processing.
FIG. 25 is a flowchart illustrating procedures of position information acquisition processing.

### DESCRIPTION OF EMBODIMENTS

Hereinafter, an embodiment (the present embodiment) of the present invention will be described with reference to the drawings.

The present embodiment relates to a risk information distribution device and a risk information distribution method that distribute risk information including information on overseas public safety, disasters, etc. to a traveler and a manager who manages the behavior of the traveler. In particular, the risk information distribution device and the risk information distribution method enable to accurately and efficiently distribute, to the traveler, necessary risk information corresponding to a current location and a future schedule of the traveler and distribute the risk information to a manager in a manner that allows the manager to quickly and accurately grasp the safety of the traveler. Note that the term "distribution" used herein includes publication, thus the published information may be configured to be browsed by the traveler or the manager.

Hereinafter, a description is provided based on the drawings.

### <Summary of risk information distribution system S according to present embodiment>

First, an overall configuration of a risk information distribution system S including a risk information distribution device (hereinafter, a device 1) will be described.

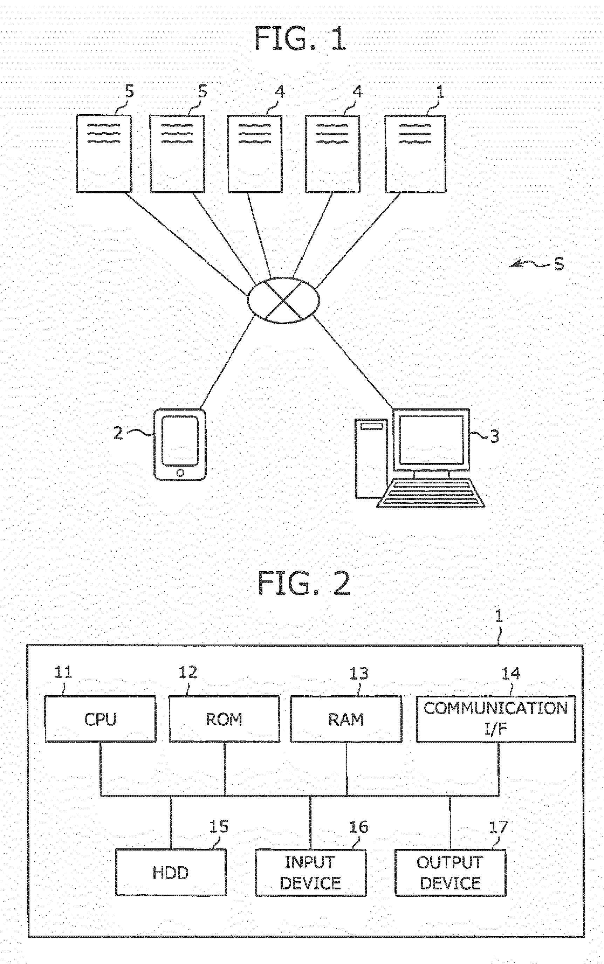

FIG. 1 is an overall view schematically illustrating the risk information distribution system S including the device 1.

The device 1 is integrated into the risk information distribution system S shown in FIG. 1 and used by a plurality of users such as people who travel abroad for the purposes of an overseas trip, an overseas business trip, an overseas assignment, etc. (hereinafter, a "traveler") and management persons of a travel agency that sells an overseas trip, a company that dispatches an employee to a foreign country by ordering an overseas business trip and an overseas assignment, etc. (hereinafter, a "manager").

As shown in FIG. 1, the risk information distribution system S of the present embodiment is mainly configured from the device 1, a portable information terminal 2 held and operated by the traveler, an information terminal for manager 3 operated by the manager, an itinerary information server 4 for storing and managing itinerary information of the traveler, and a danger information server 5 for storing and managing risk information. These components are connected to each other via an external communication network NT.

The external communication network NT is constituted, for example, by an internet, a mobile network such as 3G and 4G, a wireless communication, or the like, and communicably connects the device 1 with the portable information terminal 2, the information terminal for manager 3, the itinerary information server 4, and the danger information server 5.

Note that FIG. 1 shows a configuration in a simplified form. In reality, however, it is anticipated that a plurality of the portable information terminals 2, the information terminal for managers 3, the itinerary information servers 4, and the danger information servers 5 are each connected. Further, other servers and information terminals may be connected.

The device 1 is configured from a server computer held by a provider which distributes the risk information to the traveler and the manager (such a provider includes, for example, a travel agency that provides a distribution service of the risk information as an optional service of a travel commodity) . Then, the traveler and the manager as users can enjoy a function and service provided by the device 1 via the external communication network NT. That is, the users operate their own portable information terminals 2 or information terminals for manager 3 to communicate with the device 1 and receive the risk information distributed by the device 1. Further, the device 1 is not limited to the one constituted by one server device, and may be constituted by a plurality of server devices.

Note that the device 1 will be described in detail below.

The portable information terminal 2 includes a data transmission section and reception section capable of sending and receiving data, which allow data to be sent and received between the device 1 and the portable information terminal 2 via the external communication network NT. Further, the portable information terminal 2 of the present embodiment is compatible with a conventionally known satellite positioning system such as a global positioning system (GPS).

Note that the portable information terminal 2 is not particularly limited as long as it allows at least data communication and browsing of the risk information that is distributed. As the portable information terminal 2, a smartphone, a tablet terminal, a lap-top computer, a mobile phone, a game machine, etc. may be used.

The information terminal for manager 3 is a usual personal computer (PC), tablet-type personal computer, or the like, held by a company or an individual, and includes at least a data transmission section and reception section capable of sending and receiving data and a display section for displaying received data and the like. The information terminal for manager 3 may be a dedicated terminal, however, the present embodiment uses a general-purpose PC in which authority for each user is managed by master, without particularly designating a terminal. Specifically, the user is controlled by a log-in management using user master and the user who is authorized as a manager can use a function for manager. In this manner, the manager can access to the device 1 using the information terminal for manager 3 to confirm the risk information and the like.

The manager includes a person in charge of the system, a direct supervisor of the traveler, etc. in the company, and the authority may be set according to a managerial position or the like. For example, a manager of the company is allowed to perform all master setting and the retrieval of locations of all travelers. A manager of the division is allowed to perform the master setting of the affiliated division and the retrieval inside the division. Further, a secretary manager who has representative authority is allowed to perform an operation on behalf of his/her manager.

Conversely, when the traveler is a limited VIP such as a president and an executive, a person who performs a top-secret mission, or the like, the traveler is treated as a private user, and all itineraries (or a part of the itineraries) of the private user can be set so as not to be displayed through the retrieval performed under the ordinary retrieval authority of the company such as the one owned by the manager of the company or the manager of the division. Further, the user (the manager) authorized to retrieve the private itinerary of the private user may be separately appointed by a creator of private user master.

Further, other than the above, a regional manager may be assigned. That is, regions may be categorized in each company and the manager, such as, for example, a nationwide manager, a manager in city area, and a manager in work location, may be allowed to perform the master setting and the retrieval in each management area. Note that the regions are preferably set in each company since business regions and prioritized regions are different among the companies using the device 1.

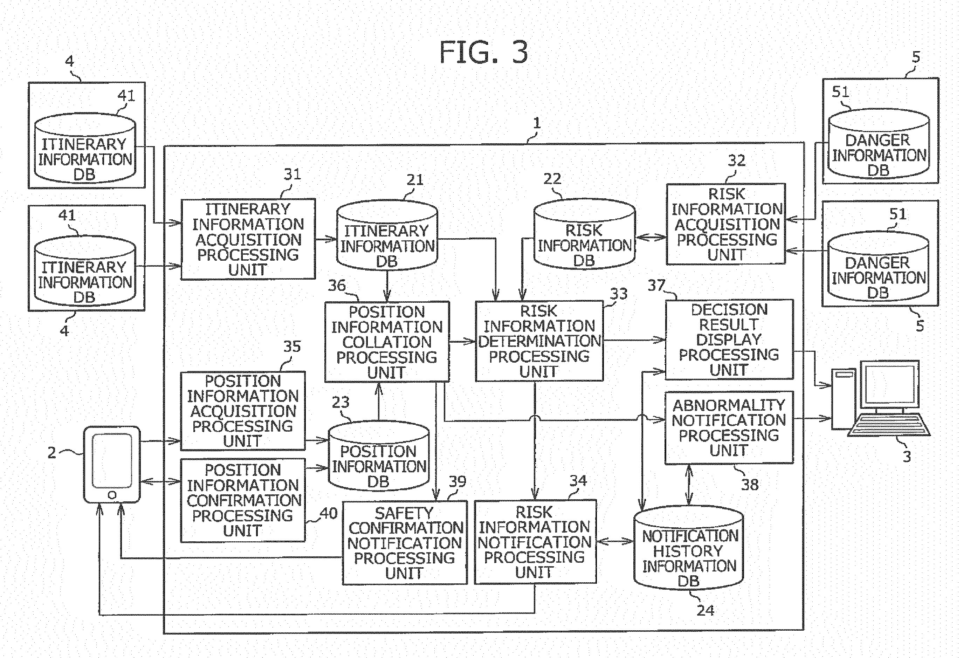

The itinerary information server 4, which functions as an external database server, includes itinerary information database 41 (FIG. 3) that stores various kinds of personal information for identifying the traveler and the itinerary of each traveler. The itinerary information server 4 is, for example, configured from a server computer held by a travel agency or the like. The itinerary information server 4 is configured to acquire information from a server or terminal of a travel agency, a booking site, a call center, etc. Specifically, preparing the itinerary includes a mechanism in which date schedule information (future information) is automatically created from a server and terminal of a travel agency, an analysis of an answer mail from a conventional internet reservation, a communication with a telephone or the like, etc. Note that most of the companies as the users use a plurality of agencies for making travel arrangements, thus a plurality of the itinerary information servers 4 are normally connected. Note that the itinerary information server 4 may be additionally connected to a computer (not shown) provided with a program imparting a longitude and latitude.

The danger information server 5, which functions as an external database server, includes danger information database 51 (FIG. 3) that stores danger information representing information regarding public safety, a disaster, etc., in countries and regions around the world. The danger information server 5 is, for example, configured from a server computer held by an organization which collects, analyzes, and distributes the danger information, such as a government organization and a danger management consulting company. The danger information includes information on all kinds of dangers that warrant special attention in traveling and staying as a result of comprehensively evaluating a public safety situation and other dangerous factors in countries and regions around the world. For example, such information includes information on a terrorism (including a plan thereof), a crime, an incident, an accident, a war, a civil war, a riot, a demonstration, a strike, an infectious disease, earthquake, tsunami, and a typhoon, and other information regarding public safety, a natural disaster, etc. Note that a plurality of the danger information servers 5, each serving as an information source, are preferably connected to obtain more pieces of information with more accuracy. Note that the danger information server 5 may be additionally connected to a computer (not shown) provided with a program imparting a longitude and latitude and an influence range.

### <Detailed configuration of risk information distribution device according to present embodiment>

Next, detailed configuration of the device 1 will be described.

FIG. 2 is a block diagram illustrating a hardware configuration of the device 1. FIG. 3 is a functional configuration diagram of the device 1.

As shown in FIG. 2, the device 1 includes, as a constituent element, a CPU 11 serving as an arithmetic unit that performs control and calculation and processing of data, a ROM 12 serving as a read only storage device, a RAM 13 serving as a main memory (a main storage device), a communication interface (referred to as a communication I/F in FIG. 2) 14 that performs transmission and reception of data, via the external communication network NT, with a communicable device such as the portable information terminal 2 and the information terminal for manager 3, the itinerary information server 4, the danger information server 5, etc., a hard disk drive 15 serving as an auxiliary storage device, an input device 16, and an output device 17.

Various programs are installed in advance in the device 1 and these programs are read out and executed by the CPU 11 to exert a function of the risk information distribution device .

In this manner, the function of the device 1 is enjoyed by a user such as the traveler and the manager. As a method for providing the user with the function, for example, a method using a cloud service, an APS service, or the like may be used. Further, the web server and the database server may be configured as a separate unit. Further, system backup and database backup are preferably performed.

The hard disk drive 15, which functions as a storage unit, stores various kinds of information in a database format. Data stored in the hard disk drive 15 include, for example, various programs previously installed to operate the device 1 and, as shown in FIG. 3, an itinerary information database 21 that stores itinerary information acquired from the itinerary information server 4 (the itinerary information database 41), a risk information database 22 that stores danger information acquired from the danger information server 5 (the danger information database 51) as risk information, a position information database 23 that acquires and stores position information of the portable information terminal 2 held by the traveler, a notification history information database 24 that stores history of alert distribution to the portable information terminal 2 held by the traveler, and the like.

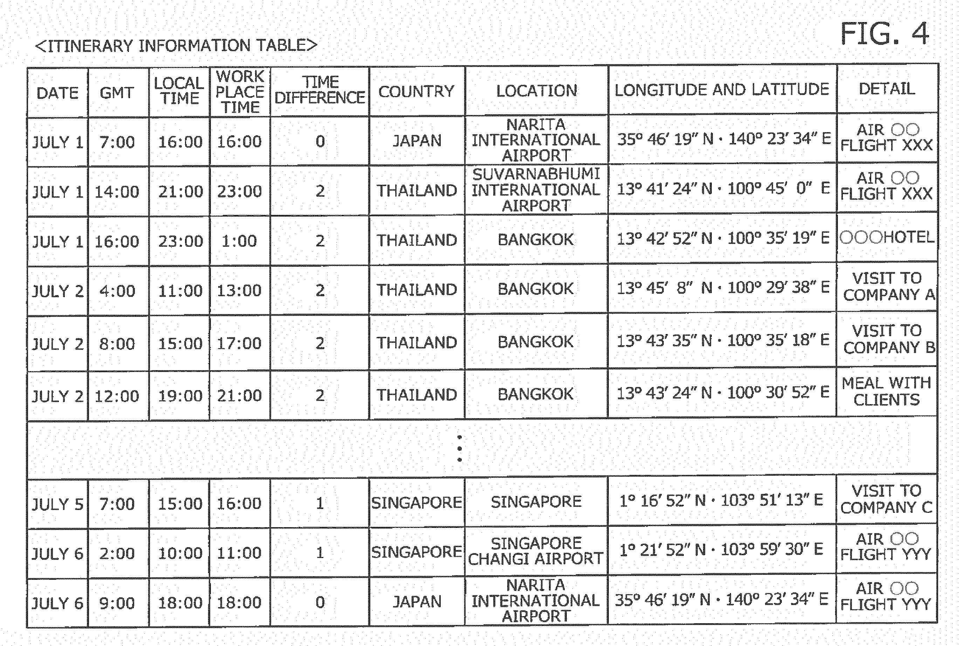

FIG. 4 is a diagram illustrating an example of an itinerary information table.

As shown in FIG. 4, an itinerary information record of the itinerary information table stored in the itinerary information database 21 is prepared by fetching all or part of information recorded in the itinerary information database 41 provided by the itinerary information server 4 and applying, to the fetched information, processing such as imparting information on a longitude and latitude, and represents electronic data that store information on when, where, what is a scheduled plan for each traveler, etc. Note that, in the present embodiment, the information stored in the itinerary information database 21 corresponds to the itinerary information.

Specifically, the itinerary information record includes various kinds of personal information for identifying the traveler (not shown) and items of month and day, GMT (Greenwich Mean Time), local time, work place time, time difference, country, location, longitude and latitude, detail, etc. The itinerary described herein records an overall travel schedule as well as specific and detailed schedules of transportation, an accommodation facility, an appointment, a meal, etc. Further, the local time represents a local time in a region where the traveler stays and the work place time represents a time in a city where the manager works (Japan time for a Japanese company).

In particular, in the present embodiment, information on the longitude and latitude is included in addition to a country and a place. In this manner, it is possible to grasp when and where the traveler is scheduled to be in the itinerary by narrowing down to a fine position indicated by the longitude and latitude by referring to the itinerary information database 21. Such examples include "arrival with AIR oo Flight XXX at the Suvarnabhumi International Airport, Thailand (at latitude 13 degrees 41 minutes 24 seconds north, longitude 100 degrees 45 minutes 0 seconds east) at 21 o'clock on July 1 in the local time (at 23 o' clock on July 1 in Japan time)" and "visit to the company A in Bangkok, Thailand (at latitude 13 degrees 45 minutes 8 seconds north, longitude 100 degrees 29 minutes 38 seconds east) at 11 o'clock on July 2 in the local time (at 13 o'clock on July 2 in Japan time)".

Further, the present embodiment is mainly intended for companies that send their employees overseas, and thus various kinds of personal information for identifying the traveler includes, in addition to a name and contact information of the traveler, information required for an organization such as an affiliation, a work place (the longitude and latitude), and an official position. This allows to perform data extraction according to a division, an official position, etc. for verifying the identity in emergencies. Thus, even a large company or the like, in which a management side hardly manages all employees in a clear manner due to their large number, can quickly take a risk response by the affiliation in the company.

Note that, in travelling on business such as an overseas business trip and an overseas assignment, a schedule for private time other than business may be left blank. Further, in principle, the itinerary can be shared by the traveler and the manager, however, a sharing limitation may be set in a manner such that a private section may be browsed only by the traveler him/herself. For example, when the traveler wants the itinerary to be closed to the public, a non-public setting may be performed by the traveler side, for example, by enabling a non-public flag (not shown) of the itinerary information or limiting the managers from browsing by the traveler him/herself. Further, such a function may be set as a special function, in which the special traveler capable of performing the above setting is assigned in advance by the manager of the company or the like, or the traveler who is not authorized by the company side is not allowed to perform the non-public setting by him/herself. Further, it is also possible to set information regarding personal information, such as a private mail address (registered for receiving mails), not to be browsed by the company.

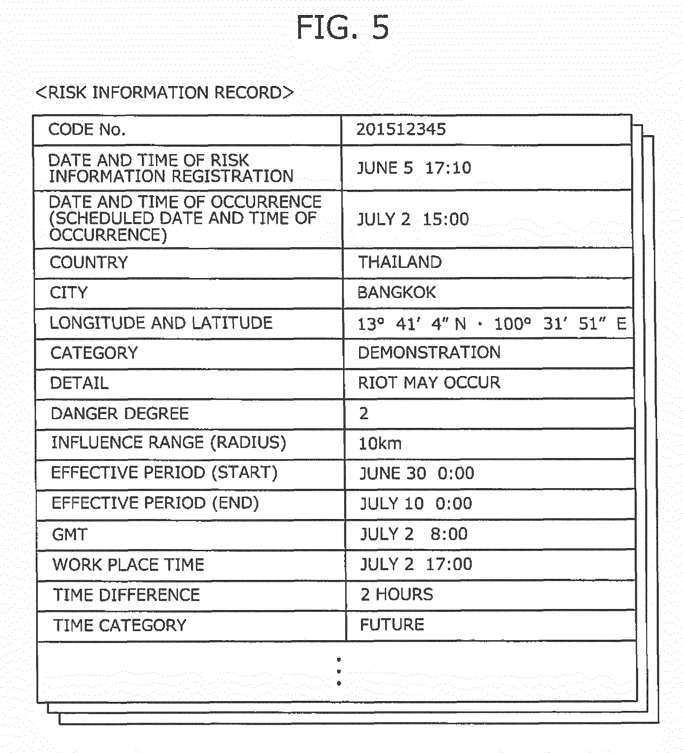

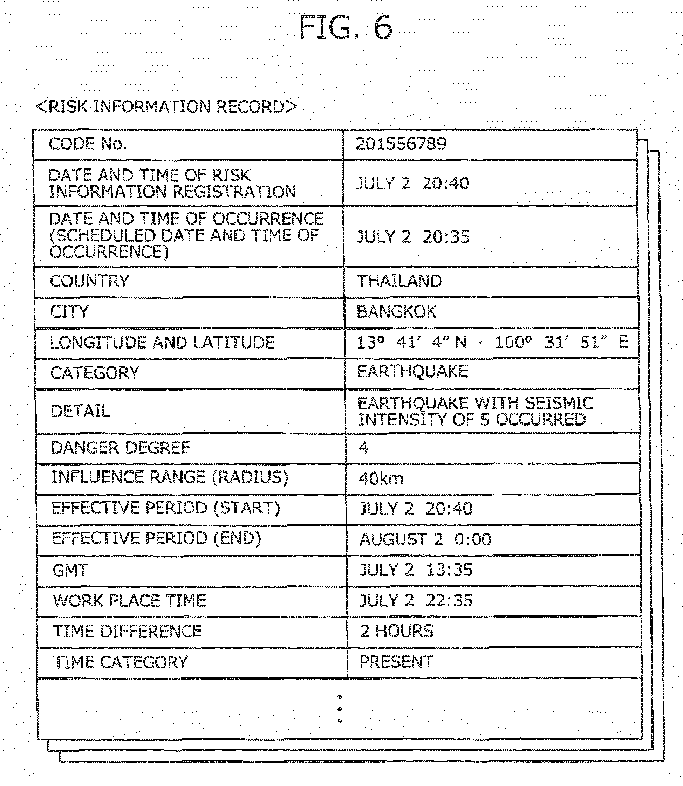

FIG. 5 and FIG. 6 are diagrams illustrating an example of a risk information record.

As shown in FIG. 5 and FIG. 6, the risk information record of the risk information table stored in the risk information database 22 is prepared by fetching all or part of information recorded in the danger information database 51 provided by the danger information server 5 and applying, to the fetched information, processing such as imparting information on the longitude and latitude, and represents electronic data that recode all kinds of danger information on, for example, a terrorism (including a plan thereof), a crime, an incident, an accident, a war, a civil war, a riot, a demonstration, a strike, an infectious disease, earthquake, tsunami, a typhoon, and other public safety, disasters, etc. in countries and regions around the world. Note that, in the present embodiment, the information stored in the risk information database 22 corresponds to the risk information.

Specifically, the risk information record includes items of a code No., date and time of risk information registration, date and time of occurrence (scheduled date and time of occurrence), country, city, longitude and latitude, category, detail, danger degree, influence range (radius), effective period (start), effective period (end), GMT, work place time, time difference, time category, etc.

The risk information includes information on public safety, disasters, etc. concerning dangers in the past, the present, and the future. In the risk information, the dangers are classified into a terrorism, demonstration, earthquake groups, etc. (categories) according to their nature and their danger degrees (danger levels) are set. Further, specific details of the dangers are described in a detail section. For example, the danger degrees are ranked into five stages from "1" to "5", and "5" represents the highest danger degree corresponding to an evacuation recommendation and a travel ban.

Further, the risk information also includes information on an influence range (an influence radius) of the risk in addition to the longitude and latitude, and the influence range is set automatically for each risk category such as the terrorism, the demonstration, and the earthquake. Note that the actual influence range may be set by a government organization, a danger management consulting company, or an operations center of the risk information distribution system S, which provides the risk information.

Further, the effective period is information indicating a period from the occurrence of the influence to the termination of the influence of the risk information, and set for each danger degree and category.

For example, the risk information record in FIG. 5 registers information indicating that "a riot may occur in Bangkok, Thailand (at latitude 13 degrees 41 minutes 4 seconds north, longitude 100 degrees 31 minutes 51 seconds east) at 15 o'clock on July 2 in the local time (at 17 o'clock on July 2 in Japan time)" at 10 minutes after 17 o'clock on June 5 in the local time. This information has the category of "demonstration", the danger degree of "2", the influence range of "10km", and the effective period of "from 0 o' clock on June 30 to 0 o'clock on July 10". Further, this information corresponds to future information and thus is recorded as "future" in the time category.

On the other hand, the risk information record in FIG. 6 registers information indicating that "earthquake with a seismic intensity of 5 occurred in Bangkok, Thailand (at latitude 13 degrees 41 minutes 4 seconds north, longitude 100 degrees 31 minutes 51 seconds east) at 35 minutes after 20 o'clock on July 2 in the local time (at 35 minutes after 22 o'clock on July 2 in Japan time)" at 40 minutes after 20 o'clock on July 2 in the local time. This information has the category of "earthquake", the danger degree of "4", the influence range of "40km", and the effective period of "from 40 minutes after 20 o'clock on July 2 to 0 o'clock on August 2". Further, this information corresponds to information in progress at present and thus is recorded as "present" in the time category.

Note that conventional risk information mainly includes post-information after the occurrence of risk, however, in the present embodiment, future risk information is also included. In particular, setting the danger degrees, for example, allows to include future risk information predicted to have a low probability of occurring at a level of an alert or an advance notice as the danger degree of "1" without any inconvenience.

Further, the risk information held by the danger information database 51 provided by the danger information server 5 normally includes a name of country, place, and city, but not the longitude and latitude. However, the risk information stored in the risk information database 22 of the present embodiment includes not only a name of country, place, and city, but also information on the longitude and latitude after calculating them. In this manner, referring to the risk information database 22 allows to grasp an actually occurring risk or a risk that may occur in the future in countries and regions around the world by narrowing down to a fine position indicated by the longitude and latitude.

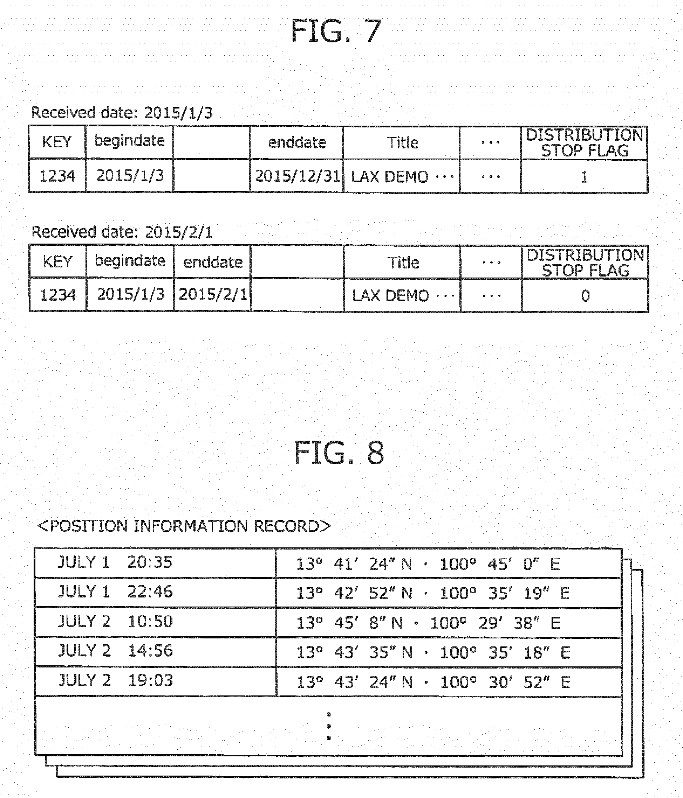

FIG. 7 is a diagram illustrating an example of the risk information records which are continuously distributed.

The risk information is sometimes continuously distributed in a form of early warning, update 1, update 2, and so on. In such a case, as shown in FIG. 7, the risk information is imparted with a key (e.g., "1234") determining the continuity, and when the keys match, a distribution stop flag "1" is set to the older information. That is, in the example shown in FIG. 7, the risk information based on the danger information distributed on Jan 3, 2015 is set with the distribution flag "1" and its distribution is stopped. In this manner, when the period is changed or revoked in the latest information, the effective period of the older risk information is invalidated and only the risk information based on the danger information distributed on February 1, 2015 can be distributed.

Specifically, for example, when distribution is scheduled on March 1, 2015, this older risk information would be distributed if the effective period is not updated. In the present embodiment, the effective period (end) is updated from Dec 31, 2015 to Feb 1, 2015, thus only the latest risk information is distributed without distributing the older risk information, thus useless distribution can be prevented. That is, this can avoid distribution of incorrect information that is not effective at the present time, so that the traveler is prevented from being confused.

FIG. 8 is a diagram illustrating an example of a position information record.

As shown in FIG. 8, the position information record of the position information table stored in the position information database 23 represents electronic data that recode position information indicating the longitude and latitude (a coordinate) of the portable information terminal 2 acquired by a conventionally known satellite positioning system such as a GPS. Note that, in the present embodiment, the information stored in the position information database 23 corresponds to the position information.

Specifically, the position information record recodes information on the longitude and latitude with time sequence. For example, it is recorded that the traveler carrying the portable information terminal 2 "was positioned at latitude 13 degrees 41 minutes 24 seconds north, longitude 100 degrees 45 minutes 0 seconds east at 35 minutes after 20 o'clock on July 1". In this manner, referring to the position information database 23 allows to grasp an actual place and time of the traveler by narrowing down to a fine position indicated by the longitude and latitude.

In the present embodiment, the various kinds of information described above are stored in the hard disk drive 15 of the device 1, however, the storage device storing the various kinds of information is not limited thereto and it may be provided as a separate device from the device 1. For example, a database server capable of communicating to the device 1 may be provided separately to be used as the storage device. Further, databases may be individually managed in a manner such that some databases are stored in the hard disk drive 15 of the device 1 and some other databases are stored in other database servers.

The hardware configuration of the device 1 has been described above. Hereinafter, the configuration of the device 1 is described again from an aspect of its function with reference to the same FIG. 3. The device 1 includes a function for executing a process for distributing the risk information, in other words, the device 1 includes a part bearing such a function.

As shown in FIG. 3, the device 1 includes, as main constituent elements, an itinerary information acquisition processing unit 31, a risk information acquisition processing unit 32, a risk information determination processing unit 33, a risk information notification processing unit 34, a position information acquisition processing unit 35, a position information collation processing unit 36, a decision result display processing unit 37, an abnormality notification processing unit 38, a safety confirmation notification processing unit 39, and an position information confirmation processing unit 40.

These constituent elements bear various kinds of data processings executed by the device 1, and are configured so as to make the above-mentioned hardware constitutional devices constituting the device 1 and installed programs cooperatively function.

The itinerary information acquisition processing unit 31, which functions as the itinerary information storage section, acquires the itinerary information from the itinerary information database 41 of the itinerary information server 4 and store the itinerary information in the itinerary information database 21 of the device 1.

In this process, the acquired itinerary information is appropriately subjected to a processing, such as the one in which the itinerary information is imparted with information on the longitude and latitude by separately preparing position master data in which names of countries and cities are associated with their longitudes and latitudes and extracting the longitudes and latitudes corresponding to the names of countries and cities indicated by the itinerary included in the acquired itinerary information to convert the itinerary information. The itinerary information is then stored in the itinerary information database 21.

Note that all pieces of the itinerary information may be acquired from the itinerary information database 41 of the itinerary information server 4 or only a necessary item may be selected and acquired. For example, only various kinds of personal information may be acquired. Further, when the acquired itinerary information already includes the information on the longitude and latitude, it may be directly stored in the itinerary information database 21. Further, a function of integrating multiple pieces of the itinerary information obtained from the itinerary information databases 41 of the multiple itinerary information servers 4 may be provided. Further, when registering the itinerary information, a method in which each time is set and a method in which time required at the time of displaying is calculated by connecting to a time conversion table or an external site are included.

The risk information acquisition processing unit 32, which functions as the risk information storage section, acquires the danger information from the danger information database 51 of the danger information server 5 and stores the danger information in the risk information database 22 of the device 1 as the risk information.

In this process, the acquired danger information is appropriately subjected to a processing, such as the one in which the danger information is imparted with information on the longitude and latitude by separately preparing the position master data in which names of countries and cities are associated with their longitudes and latitudes and extracting the longitudes and latitudes corresponding to the names of countries and cities included in a content or the like of the acquired danger information to convert the danger information. The danger information is then stored in the risk information database 22.

Further, a language of the acquired danger information may be translated. For example, the danger information written in English may be translated into Japanese and the duplicated danger information having the same contents may be stored in the risk information database 22 as two kinds of risk information written in English and Japanese.

Further, when the multiple pieces of the danger information are acquired from the multiple danger information servers 5, that is, when the multiple pieces of the danger information are acquired from multiple sources, the contents of the multiple pieces of the danger information may be verified while being mutually related to each other to improve information accuracy. The multiple pieces of the danger information are then stored in the risk information database 22 as the risk information. For example, in addition to acquiring the danger information from the danger information server 5, an operation center may perform close examination of the danger information and add more information (addition of the longitude and latitude, the influence range, etc.).

In particular, when the multiple pieces of the danger information are distributed from the multiple danger information servers 5, the multiple pieces of the danger information often redundantly indicate the same events. When the traveler is notified with all these pieces of the danger information as the risk information, the traveler may be confused or find it annoying to confirm the risk information, thus it is questionable to reduce the risk in this manner. On the other hand, in the present embodiment, when the danger information is acquired, the newly acquired danger information is collated with the risk information already stored in the risk information database 22 to precisely examine if there is any change or the like in the contents of the specific items indicating when, where, what kind of event occurs, etc., and the redundant pieces of the danger information are removed during this process.

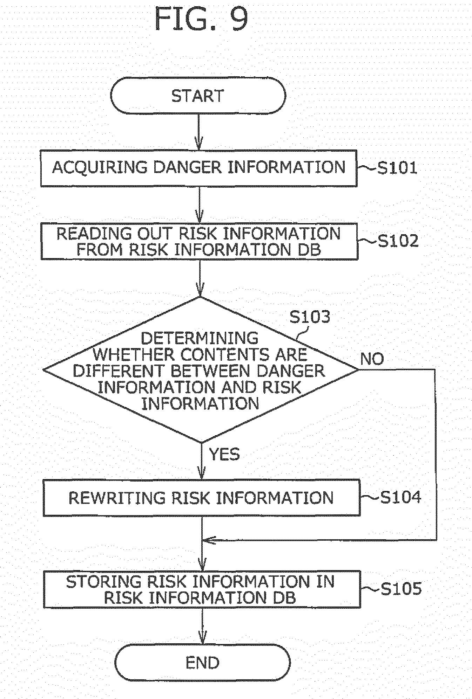

FIG. 9 is a flowchart illustrating procedures of risk information acquisition processing executed by the risk information acquisition processing unit 32. Specifically, when the multiple pieces of the danger information are acquired, the risk information is kept up to date all the time and the redundant pieces of information are removed by these procedures.

First, when the danger information on the same event as that indicated by the risk information already stored in the risk information database 22 is newly acquired from the danger information server 5 (S101), the corresponding risk information is read out from the risk information database 22 (S102) . Then, the contents of the specific items specifying when, where, what kind of event occurs, etc. included in the newly acquired danger information are compared and collated with the contents of the specific items as described above included in the extracted risk information to determine whether there is any change in the newly acquired danger information from the existing risk information, that is, determine whether there is any difference between two contents (S103) . When there is a difference (S103: YES), the risk information is rewritten to the contents of the newly acquired danger information (A104) and the risk information of which the contents are updated is stored in the risk information database 22 (S105). On the other hand, when there is no difference (S103 : NO), the existing risk information is stored as it is in the risk information database 22 (S105).

In this manner, the risk information can be kept up to date and correct all the time. Further, even when the multiple pieces of the danger information indicating the same events are acquired, the risk information is never redundantly created.

Note that whether the newly acquired danger information and the risk information already stored indicate the same events is comprehensively determined based on information on the categories, the occurring time and areas, etc. of the danger information and the risk information. Further, the comparison and collation of the danger information and the risk information can be performed, for example, by confirming the presence of any change or difference at a character level or a word level.

The risk information determination processing unit 33, which functions as the risk information determining section, compares the longitude and latitude of the risk information stored in the risk information database 22 and the item of the longitude and latitude included in the itinerary information stored in the itinerary information database 21 or in the position information stored in the position information database 23, and determines whether the two longitudes and latitudes are the same or the error between the two longitudes and latitudes is within the predetermined distance range. Further, the risk information determination processing unit 33 compares the effective period of the risk information stored in the risk information database 22 and the item of the date and time included in the itinerary information stored in the itinerary information database 21 or in the position information stored in the position information database 23, and determines whether the date and time of the itinerary information or the position information is within the effective period of the risk information.

For example, one method includes a collation between the items of the longitude and latitude and the effective period included in the risk information, and the items of the longitude and latitude and the date and time of the itinerary information extracted from the itinerary information database 21 or the position information extracted from the position information database 23. Another method may be searching the itinerary information or the position information having the longitude and latitude which is the same as that of the risk information or of which the error from that of the risk information is within the predetermined distance range, and having the date and time that is within the effective period of the risk information, in the itinerary information database 21 or the position information database 23.

Further, the predetermined distance range serving as a reference for determination is so-called a range influenced by the risk and automatically set according to the categories and the danger degrees of the risk information. Further, certain latitude may be allowed in this range. For example, in the case of the risk information having the danger degree of 1, such as a demonstration plan, a range of allowable error may be made smaller to include only a limited area (e.g., a 5km radius or the like), and in the case of the risk information having the danger degree of 5, such as a terrorism and a war, a range of allowable error may be made larger to include an area as wide as possible (e.g. , a 50km radius, an entire city, or the like) . Further, a minimum influence range of the risk may be set to an actual influence range. In addition to that, as the minimum influence range of the risk, a specific influence range may be set for each category of the risk information. For example, in the case where the actual influence range of the demonstration is a 1km radius, when the influence range specific to the demonstration is set to a 25km radius in advance, the alert can be distributed to the traveler arriving at a nearby hotel or airport, resulting in a preventive measure against the risk.

Note that the predetermined distance range is not limited to the one described above, and the predetermined distance range may be equally set for all cases or set for each case in consideration of various circumstances, such as the season and a regional situation. Further, it may be individually set by each company as a user and determination may be made based on whether the predetermined distance range (a reference value) thus set is satisfied.

The risk information notification processing unit 34, which functions as the risk information notifying section, perform alert distribution of the content of the risk information, the preventive measure, etc. to the portable information terminal 2 of the traveler corresponding to the itinerary information or the position information, which is determined to have the longitude and latitude that is the same as that of the risk information or of which the error from that of the risk information is within the predetermined distance range by the risk information determination processing unit 33 described above. In this process, the content of the risk information distributed as the alert preferably includes an overview of the risk, the category of the risk, the danger degree of the risk (the danger level), and the preventive measure such as evacuation and standby.

A distribution method may be any of a mail, a voice mail, a FAX, a SNS, a push notification, a dedicated application, a substitutional notification by a call center, or the like. These may be used in combination. Distribution using the various methods enhances the reachability of information to the traveler.

Note that alert is continuously distributed until a reply or answer is received from the traveler. This allows to identify the traveler giving no response. Further, when no response is received after distribution is made prescribed number of times, the decision result display processing unit 37 described below distributes a warning to the manager and changes a color on the screen of the manager.

Further, history of the alert distribution is recorded in the notification history information database 24. For example, such history recodes when, where, and what contents of the risk information are distributed to the traveler. Managing names and the number of the travelers to whom is distributed the risk information and storing them in the history in this manner allows to describe the number of distribution and the like on a list of alert. In particular, it is now possible to grasp the number of distribution, thus, concerning the risk information on an area irrelevant to the company (an area where there is no corresponding traveler or person scheduled to travel), of which the number of distribution is zero, the manager can briefly grasp such information only as reference information and be saved the necessity of performing useless confirmation on details or the like. Thus, work efficiency of the manager can improve.

The position information acquisition processing unit 35, which functions as the position information acquiring section, stores the position information of the portable information terminal 2 acquired by a conventionally known satellite positioning system such as a GPS in the position information database 23 of the device 1.

In the present embodiment, continuous log monitoring of the position information of the portable information terminal 2 of the traveler is unnecessary, and the log is appropriately acquired at a predetermined timing according to the itinerary, for example, in an occurrence time zone of an event, such as several minutes before and after scheduled time of the arrival at a hotel and several minutes before and after scheduled time of the start and end of an appointment. Note that, in the occurrence time zone of an event, the position information may be captured x hours before each event, and this may be set on a user company basis. Capturing the position information x hours before each event allows the manager to grasp in advance whether the traveler can arrive at an event time on schedule using the position information collation processing unit 36 described below.

The position information collation processing unit 36, which functions as the position information collating section, compares the position information stored in the position information database 23 and the item of the longitude and latitude included in the itinerary information stored in the itinerary information database 21, and determines whether the two longitudes and latitudes are the same or the error between the two longitudes and latitudes is within a range of an acceptable distance (an allowable distance) to an extent that allows to recognize that the traveler is at the corresponding site.

For example, when the item of the longitude and latitude included in the position information extracted from the position information database 23 and the item of the longitude and latitude of the itinerary information extracted from the itinerary information database 21 are collated and it is determined that the two longitudes and latitudes are the same or the error between the two longitudes and latitudes is within the allowable distance range, that is, when the traveler follows the schedule registered in the itinerary information, the position information is updated as collated information.

In this process, when the traveler is not within the allowable range (location and time) in the occurrence time zone of an event, an emergency comparison logic may be issued on a regular basis. When the traveler arrives at the event place or a place of the next event (skipping one event), the emergency comparison logic is suspended and the manager is notified by the abnormality notification processing unit 38 described below.

The decision result display processing unit 37, which functions as the management information sending section, sends the risk information and information regarding the traveler to the information terminal for manager 3.

In this process, the information sent to the information terminal for manager 3 by the decision result display processing unit 37 enables to visualize a staying location of the traveler and a dangerous area indicated by the risk information as an image, a graph, a diagram, or the like in the information terminal for manager 3.

In particular, the information may be configured to be sent to the information terminal for manager 3 only when the traveler possibly falls into a dangerous situation. That is, when the risk information determination processing unit 33 described above determines the existence of the itinerary information or the position information having the longitude and latitude which is the same as that of the risk information or of which the error from that of the risk information is within the predetermined distance range, the risk information and the information regarding the corresponding traveler are sent to the information terminal for manager 3. In this process, the information sent to the information terminal for manager 3 by the decision result display processing unit 37 may be the one in which the risk information and the information regarding the traveler are associated with each other.

Further, a large number of the travelers may delay the recognition of a dangerous situation because of too many mails to be distributed, thus, in addition to individually sending each piece of information, the contents to be notified may be collectively sent as one piece of information in the same time zone (e.g., 5 minutes long or the like). A main text of the mail may include a link to the system, so that a list of information on the corresponding traveler or a situation of the traveler is obtained by referring to the link. This eliminates the necessity of individually notifying the current location information of the traveler to the manager.

The abnormality notification processing unit 38, which functions as the abnormality notifying section, sends information capable of identifying the traveler, such as a code number and name of the corresponding traveler, to the information terminal for manager 3, when the position information collation processing unit 36 described above determines that the longitude and latitude included in the position information stored in the position information database 23 and the longitude and latitude included in the itinerary information stored in the itinerary information database 21 are not the same or the two longitudes and latitudes are not within the allowable distance range.

In this process, the information sent to the information terminal for manager 3 by the abnormality notification processing unit 38 is not limited as long as it can identify the traveler. The information may also be visualized as an image, a graph, a diagram, or the like in the information terminal for manager 3. Further, information indicating the current location of the corresponding traveler may be sent together.

Further, a large number of the travelers may delay the recognition of a dangerous situation because of too many mails to be distributed, thus, in addition to individually sending each piece of information, the contents to be notified may be collectively sent as one piece of information in the same time zone (e.g., 5 minutes long or the like). A main text of the mail may include a link to the system, so that a list of information on the corresponding traveler or a situation of the traveler is obtained by referring to the link. This eliminates the necessity of individually notifying the current location information of the traveler to the manager.

Further, in notifying abnormality, only a notification indicating the existence of the corresponding traveler may be sent to the manager and its detailed content may be browsed on a web page as a dedicated site or the like. This can reduce a volume of the notification and prevent the delay of the recognition of a dangerous situation because of too many mails to be distributed, etc. Further, this can prevent a large number of mails from being distributed to the manager when a large-scale disaster or the like occurs at the same place, etc.

The safety confirmation notification processing unit 39, which functions as the safety confirmation notifying section, sends safety confirmation information (a safety confirmation mail or the like) to the portable information terminal 2 of the corresponding traveler, when the position information collation processing unit 36 described above determines that the longitude and latitude included in the position information stored in the position information database 23 and the longitude and latitude included in the itinerary information stored in the itinerary information database 21 are not the same or the two longitudes and latitudes are not within the allowable distance range.

Examples of the safety confirmation information include the one in which the safety is confirmed by replying to a mail or the like, and the one in which the safety is confirmed by accessing to a link attached to the content of a mail.

Note that, in emergencies, the safety confirmation information can be sent to, in addition to the portable information terminal 2 of the traveler him/herself, other information terminals related to the traveler, that is, information terminals or the like equipped at the places (a hotel, an airport, an office, and the like) included in the itinerary information, and the hotel, etc. can perform the safety confirmation on behalf of the traveler.

Further, the safety confirmation information can be continuously and repeatedly sent when the safety confirmation is not obtained from the traveler or a party on behalf of the traveler.

The position information confirmation processing unit 40 confirms the position information and the safety of the traveler by sending a position confirmation mail or the like to the portable information terminal 2 held by the traveler and receiving a reply or a read notification from the traveler.

For example, this is effective when a radio wave condition of GPS is poor or a GPS function is disabled, and the current location confirmation mail or the like is sent at a predetermined timing according to the itinerary (e.g., several minutes before and after scheduled time of the start and end of an appointment, etc.). In this process, a rough location of the portable information terminal 2 receiving the mail or the like can be confirmed using base station data of a communication carrier.

### <Risk information distribution method according to present embodiment >

Next, a risk information distribution method according to present embodiment will be described.

The risk information distribution method according to present embodiment is achieved by using the device 1 functioning as a computer, in other words, the risk information distribution method according to present embodiment is applied to the risk information distribution processing executed by the device 1.

The followings are a description of the risk information distribution method according to the present embodiment with specific examples and a description of operations of the device 1 and procedures of processing in the risk information distribution method.

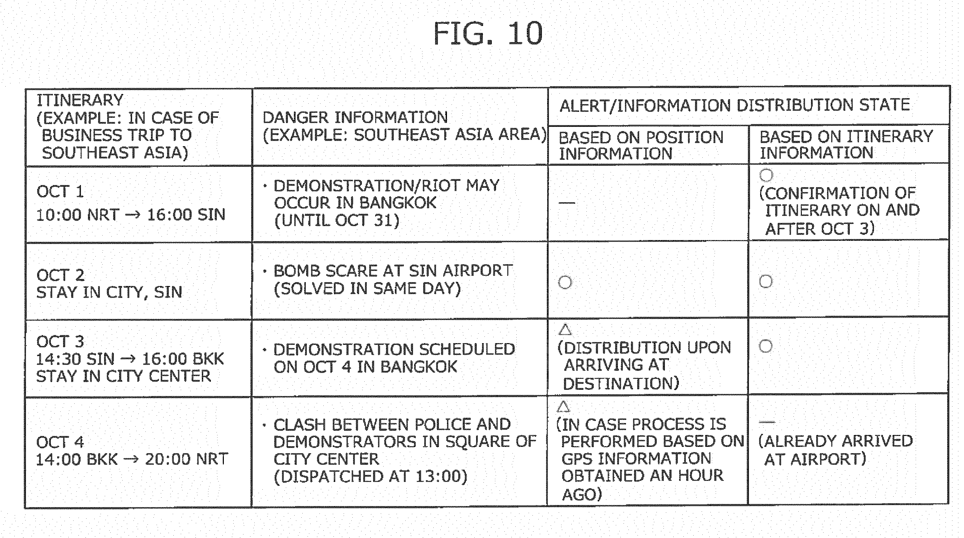

FIG. 10 is a table illustrating an example of distributing the risk information by linking the itinerary information with the position information.

As shown in FIG. 10, in the present embodiment, a current location of the traveler and the necessary risk information corresponding to a future schedule are accurately and efficiently distributed by linking the itinerary information with the position information.

For example, when the risk information indicates that "a demonstration/riot may occur in Bangkok until Oct 31", the traveler who is scheduled to visit Bangkok in October according to the itinerary information is determined to be a distribution target of this risk information, although the traveler is not actually in Bangkok at present.

Specifically, (1) when the traveler leaves the Narita International Airport at 10 o'clock on Oct 1 and is scheduled to arrive at the Singapore Changi Airport at 16 o'clock on the same day, the traveler is not the distribution target of the corresponding risk information simply based on the current location information. However, the traveler is scheduled to visit to the Suvarnabhumi International Airport (Bangkok, Thailand) at 16 o'clock on Oct 3 according to the itinerary information, thus the traveler can be included as the distribution target of the corresponding risk information by confirming the itinerary on and after Oct 3 as of Oct 1st. (2) When the risk information indicates "bomb scare at the Singapore Changi Airport on Oct 2 (solved in the same day)", the current risk information can be timely distributed to the traveler who is actually in Singapore and stays in the city, judging from both the itinerary information and the position information. (3) When more detailed risk information indicating "a demonstration scheduled to start in Bangkok on Oct 4" is acquired on Oct 3, first, the risk information can be immediately distributed according to the itinerary information to call attention of the traveler in advance, and then the risk information can be distributed at the time of arriving at an actual site according to the position information. (4) The past risk information indicating "a clash between the police and the demonstrators in the square of the city center (dispatched at 13 o'clock)" can be distributed to the traveler at the Suvarnabhumi International Airport at 14 o'clock on Oct 4, judging from the past position information.

As described above, in the present embodiment, the traveler as the distribution target of the risk information can be determined based on both the future schedule and the current location. In particular, it becomes possible to distribute the future risk information to the traveler in advance, which would have been difficult to achieve based on the current location information by GPS or the like. Thus, the traveler can immediately confirm whether there is any danger information related to his/her itinerary when registering the itinerary. Further, the traveler can check in advance the risk information before departure and the one of the next destination at any time.

Next, concrete procedures of the risk information distribution method in the risk information distribution system S are described with reference to screen examples displayed on the portable information terminal 2 and the information terminal for manager 3.

Note that, in this description, an overseas business trip is taken as an example, where the traveler is a traveler who travels abroad on business as a business trip and the manager is a management person (a person in charge of system, a direct supervisor, etc.) of a company or the like dispatching an employee to a foreign country.

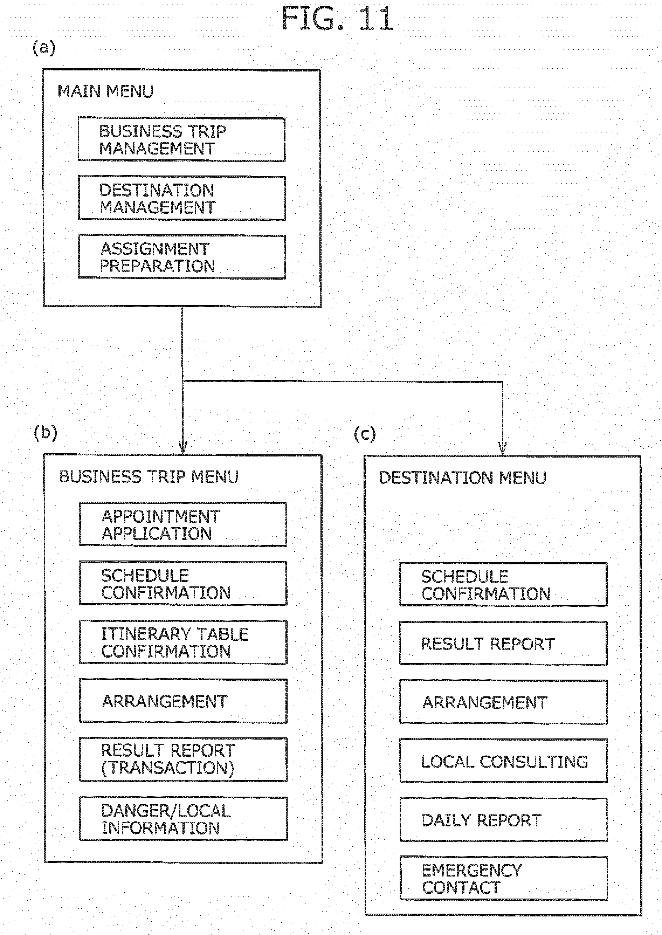

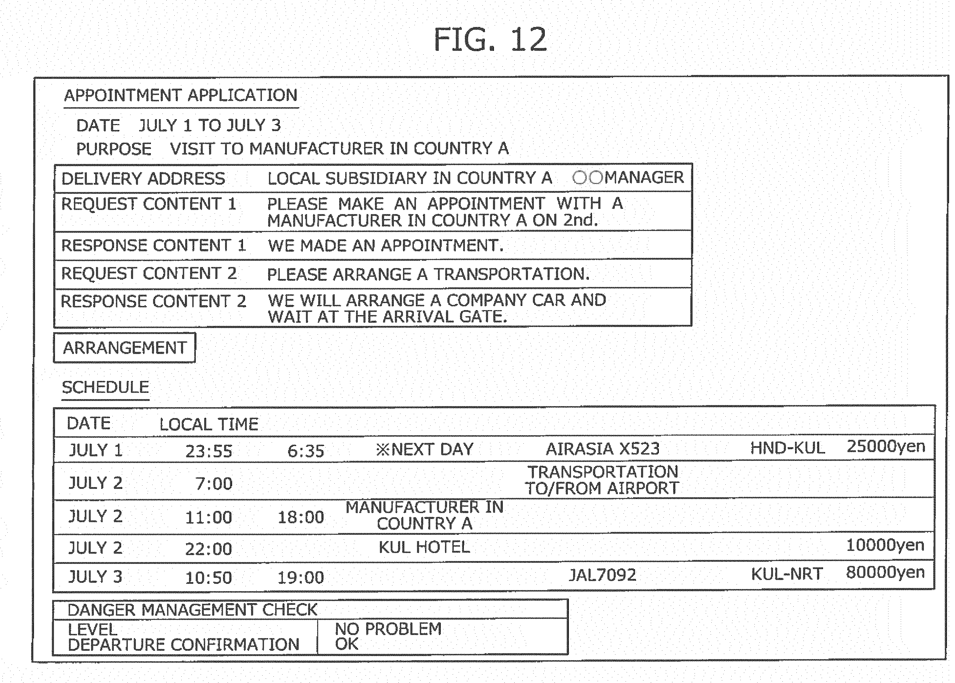

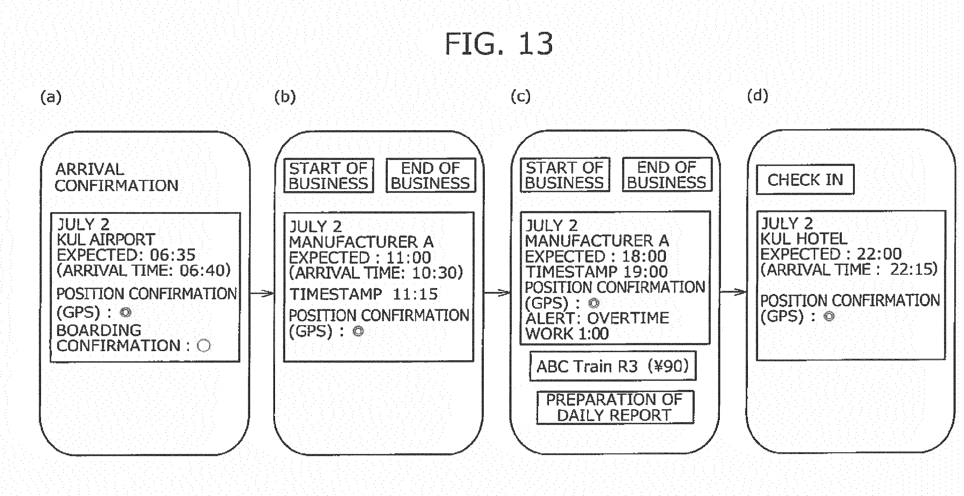

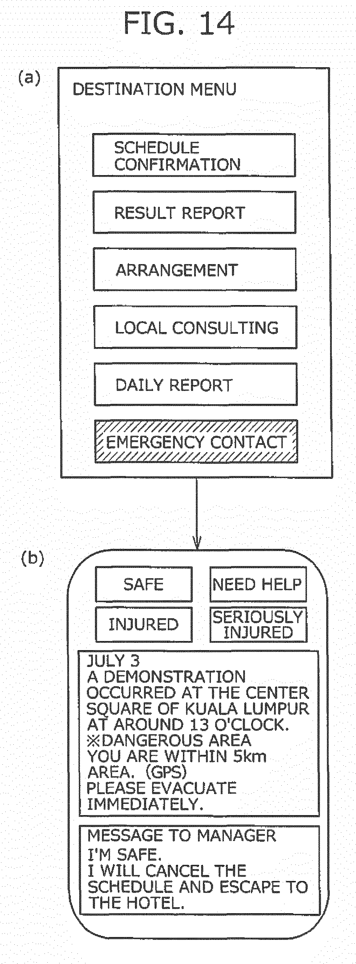

FIG. 11 is a diagram illustrating an example of a transition of display screens of the portable information terminal 2, where (a) is a main menu screen, (b) is a business trip menu screen, and (c) is a destination menu screen. FIG. 12 is a diagram illustrating an example of the display screen of the portable information terminal 2, where an appointment confirmation screen is displayed. FIG. 13 is a diagram illustrating an example of a transition of the display screens of the portable information terminal 2, where (a) to (b) are the screens displayed for each event registered in the itinerary. FIG. 14 is a diagram illustrating an example of a transition of the display screens of the portable information terminal 2, where (a) is a destination menu screen and (b) is a screen showing a display example of the distributed risk information.

First, the traveler as a user carries out registration of the itinerary from the portable information terminal 2 held by the traveler him/herself.

Specifically, the traveler taps a business trip management button from the main menu screen shown in (a) of FIG. 11 for switching to a business trip menu screen shown in (b) of FIG. 11 and performs operations such as appointment application, schedule confirmation, itinerary confirmation, arrangement, and result report (transaction). In this process, the traveler can confirm in advance local information including the risk information on the destination by tapping danger/local information. Further, the traveler taps a destination management button from the main menu screen for switching to a destination menu screen shown in (c) of FIG. 11 and performs operations such as schedule confirmation, result report, arrangement, local consulting, daily report, and emergency contact,

Tapping an appointment application button on the business trip menu screen shown in (b) of FIG. 11 allows to apply for an appointment with a local party on an appointment screen (not shown) . Once the appointment is made, such an appointment is integrated into the itinerary.

The traveler can browse a progress of the appointment application, a schedule of the finalized appointment, details of the appointment, and a danger management check of the destination on the appointment confirmation screen shown in FIG. 12. For example, in the itinerary in which the traveler visits a manufacturer in country A from July 1 to July 3, the item of the danger management check indicates that danger level is "No problem" and departure confirmation is "OK". In this manner, the traveler can easily confirm the risk information of the destination in advance. Note that the content displayed in the item of the danger management check is a result of the collation of the itinerary information and the risk information performed by the risk information determination processing unit 33.

On the day of the business trip, the traveler as a user travels according to the itinerary registered beforehand.

Specifically, upon tapping a schedule confirmation button on the destination menu screen shown in (c) of FIG. 11, a screen corresponding to each event is displayed at the timing when the events (arrival at and departure from an airport, arrival at and departure from an accommodation facility, an appointment, etc.) registered in the itinerary occur.

For example, as shown in (a) of FIG. 13, in the case where the traveler is scheduled to arrive at the Kuala Lumpur International Airport at 35 minutes after 6 o'clock on July 2 according to the itinerary information, when the position information of the traveler acquired by GPS or the like confirms the arrival of the traveler at the Kuala Lumpur International Airport (arrival time at 40 minutes after 6 o'clock), position confirmation (GPS) on the screen indicates "⊚", and boarding confirmation is automatically performed.

Further, as shown in (b) of FIG. 13, in the case where the traveler has an appointment with the manufacturer A at 11 o'clock on July 2 according to the itinerary information, when the position information of the traveler acquired by GPS or the like confirms the location of the traveler at the manufacturer A (arrival time at half past 10 o'clock), the position confirmation (GPS) on the screen indicates "⊚". Further, tapping a business start button creates a timestamp to record the start of business at quarter past 11 o'clock.

Further, as shown in (c) of FIG. 13, in the case where the traveler is scheduled to complete the appointment with the manufacturer A at 18 o' clock on July 2, as long as the position information of the traveler acquired by GPS or the like confirms the location of the traveler at the manufacturer A, the position confirmation (GPS) on the screen indicates "⊚". Further, tapping a business end button creates a timestamp to record the end of business at 19 o'clock. Note that it is also possible to have a configuration where an expense transaction can be performed on the same screen or a screen for creating a daily report can be switched from the same screen.

Further, as shown in (d) of FIG. 13, in the case where the traveler is scheduled to arrive at a hotel in Kuala Lumpur at 22 o'clock on July 2 according to the itinerary information, when the position information of the traveler acquired by GPS or the like confirms the arrival of the traveler at the Kuala Lumpur International Airport (arrival time at quarter past 22 o'clock), the position confirmation (GPS) on the screen indicates "⊚".

In this manner, the current location of the traveler is confirmed by collating the itinerary information registered beforehand and the position information acquired by GPS or the like on each occasion using the position information collation processing unit 36 of the device 1. Thus, in the present embodiment, the position information of the traveler does not need to be monitored all the time and the position information only need to be confirmed for each event registered beforehand in the itinerary information.

In particular, the arrival of an aircraft itself can be currently confirmed by a system of an airline company or the like, however, the manager cannot automatically grasp whether the traveler him/herself is actually on board. However, in the present embodiment, the manager can also grasp whether the traveler him/herself is actually on board by comparing and collating an airport arrival time according to the itinerary and the actual position information.

Note that, in this process, when there is inconsistency in terms of time and the current location between the itinerary information and the position information, such an event is detected as an abnormal value and the abnormality notification processing unit 38 of the device 1 sends such information to the information terminal for manager 3.

Further, the itinerary information may be changed by the traveler at the destination and information on the changed content is in principle shared between the traveler and the manager.

When a situation causing a danger to the traveler's life develops at the staying place of the traveler (including a case where such a situation may develop), the risk information notification processing unit 34 of the device 1 distributes the corresponding risk information to the portable information terminal 2 held by the traveler (alert distribution).

In this process, the risk information determination processing unit 33 of the device 1 searches the itinerary information or the position information based on the risk information to extract the traveler staying at the corresponding location. Note that, for example, names of countries and regions included in the risk information may be collated with those of the itinerary information and the longitudes and latitudes may be collated with those of the position information to perform dual collation. Further, the alert distribution may be performed as a pull type distribution, but it is preferably performed as a push type distribution.

When the portable information terminal 2 receives the risk information by a mail or the like, for example, as shown in (a) of FIG. 14, the traveler is prompted to tap an emergency contact button by making a noise, brightening a screen, or the like. When the traveler taps the emergency contact button, as shown in (b) of FIG. 14, the content of the distributed risk information is displayed on the screen.

For example, the screen displays that "a demonstration occurred in the center square of Kuala Lumpur at around 13 o' clock on July 3, 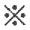 dangerous area you are within 5 kilometer area (GPS), please evacuate immediately" . In this process, the traveler can be notified of the distance of the current location of the traveler from the occurring site using the position information acquired by GPS or the like. A content of the alert may include, in addition to information describing the situation, advices on how the traveler should behave or the like, such as evacuation and standby. Further, the traveler can notify the current situation to the manager side from the same screen. For example, the traveler can inform a current situation, such as safe, need help, injured, and seriously injured, by tapping the corresponding buttons. Further, the confirmation mail or the like may be sent again when the traveler does not give a reply.

Note that it is also possible to share the information regarding the corresponding traveler in emergencies with an overseas office of a travel agency, a hospital, an insurance company, a medical assistance company, a rescue company, etc. and achieve a push type support from all the parties concerned according to a need and through a swift process.

On the other hand, the manager can confirm the location of the traveler and the risk information on the screen of the information terminal for manager 3.

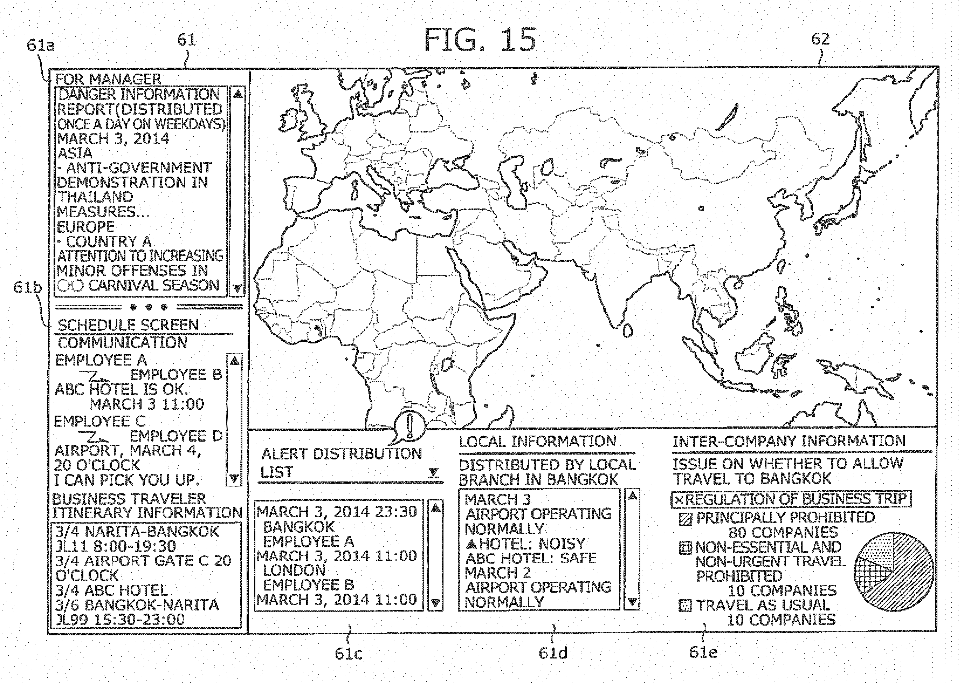

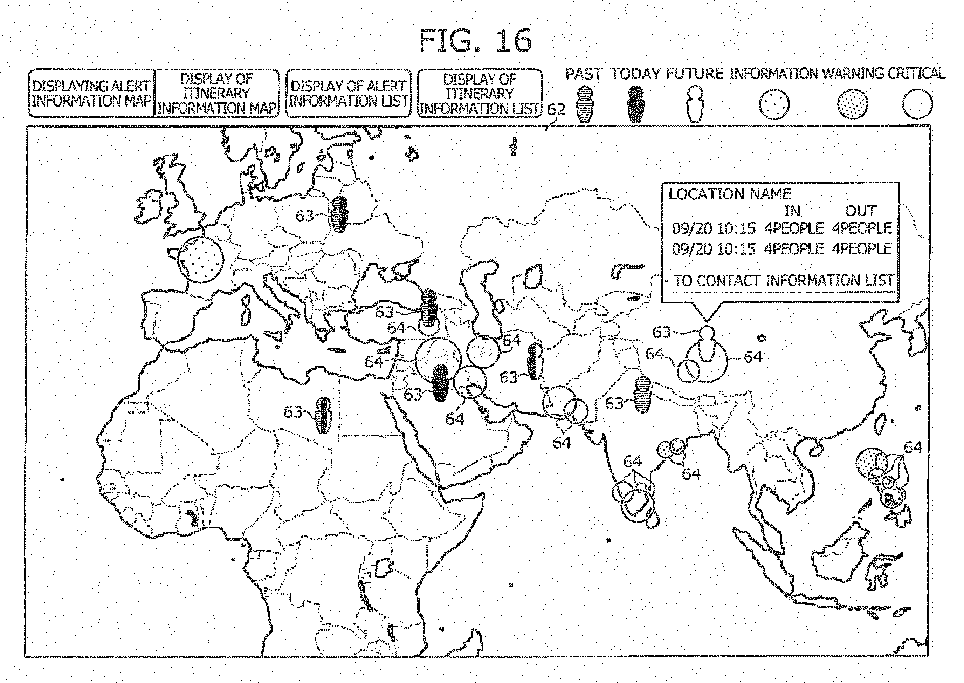

FIG. 15 is a diagram illustrating an example of a display screen of the information terminal for manager 3. FIG. 16 is an enlarged view of an essential part (a map display area 62) of the display screen of the information terminal for manager 3, particularly showing a situation where the risk information occurs.

The information terminal for manager 3 receives the information sent by the decision result display processing unit 37 of the device 1 and displays the information on the display screen of the information terminal for manager 3 in a visualizable form, such as a text and a map.

For example, the display screen of the information terminal for manager 3 is, as shown in FIG. 15, mainly configured from a various information display area 61 and a map display area 62.

The various information display area 61 is, for example, configured from a risk information display field 61a, a traveler information display field 61b, an alert distribution history display field 61c, a local information display field 61d, an inter-company information display field 61e, and the like.

The risk information display field 61a summarizes and displays, to the manager, all kinds of the danger information regarding public safety, disasters, etc. in countries and regions around the world, that is, the risk information acquired from the danger information server 5 (the danger information database 51) or the risk information stored in the risk information database 22. For example, it displays "Asia: an anti-government demonstration in Thailand, measures...", "Europe: attention to increasing minor offenses in a carnival season in Country A", etc.

The traveler information display field 61b displays the itinerary of each traveler as business traveler schedule information, as well as a message sent from the traveler to the manager, contents of information exchanged between the travelers staying in countries and regions close to each other, etc. For example, it displays "From employee A to employee B, ABC hotel is ok, 11 o'clock, March 3", "From employee C to employee D, I can pick you up at airport, 20 o'clock, March 4" , etc. This allows the manager to grasp the behavior of the travelers and information on the destination countries and regions. Further, this allows the travelers to communicate and share information with each other.

Further, the traveler and the manager can also share information (including update of information) with a local manager (e.g., a meeting person from an overseas local subsidiary or the like) using the traveler information display field 61b. For example, the traveler information display field 61b can be used in a planning stage of the business trip as follows. First, the traveler automatically incorporates a flight itinerary from a travel agency and notifies a local manager appointed by the traveler of the itinerary, to which an airport arrival time, etc. are newly added, together with a message. The local manager confirms the itinerary and the message enclosed in the notification (or they may be browsed by clicking a link destination) . For example, when the content of the message reads "please arrange a transportation and a hotel" , the local manager arranges a transportation and a hotel, and then resisters an itinerary of the transportation and the hotel (including a note) in the itinerary of the traveler. The local manager also resisters a reply message for the traveler. Further, if the note or message regarding the transportation includes a name of a driver, the number of a vehicle's plate, or the like, it is effective against a trouble involving a fake pick up or the like. In this manner, the traveler can be saved the trouble of inputting a record of the transportation and the hotel by him/herself and registering the itinerary twice. On the other hand, the local manager can grasp the latest itinerary of the traveler to manage arrival information, thus the local manager never fails to meet the traveler at the airport.

The alert distribution history display field 61c displays history of alert distributed to the traveler. For example, it displays "23:30, March 3, 2014, Bangkok, employee D", "11:00, March 3, 2014, London, employee E", etc.

The local information display field 61d displays general local information, such as news and topics provided by a travel agency, its local branch, etc. This allows the manger to grasp raw local information. For example, it displays "March 3, airport operating normally, ▲ hotel: noisy, ABC hotel: safe", "March 2, airport operating normally", etc.

The inter-company information display field 61e displays consciousness and trends of risk information managements in other companies, such as information on results of questionnaires performed in other companies. For example, it displays "whether to allow travel to Bangkok: principally prohibited 80 companies, non-essential and non-urgent travel prohibited 10 companies, travel as usual 10 companies", etc. Note that, in this process, display is performed not only by character information, but also by generating a graph or the like.

As shown in FIG. 16, the map display area 62 simultaneously displays information indicating the staying location of the traveler and information on a dangerous area indicated by the risk information on a world map.

In the information indicating the staying location of the traveler, human type icons 63 are plotted and displayed at the corresponding locations on the world map in a manner that can distinguish among past, present, and future based on the current time and the longitudes and latitudes included in the itinerary information.

For the human type icons 63, three colors are set for indicating the past, the present, and the future, and one human type icon 63 is expressed with a combination of these colors, so that overlaps of the human type icons 63 on the same spot can be recognized at a glance.

Further, the human type icons 63 indicate information on how many people enter or leave that location on a given date, and allow to confirm information on contact addresses and the like of the corresponding travelers. Displaying a list of the contact addresses in an instant manner can reduce a workload of the manager for making contacts. Note that the list of the contact addresses may be downloaded to the information terminal for manager 3 and the like.

On the other hand, in the information on the dangerous area, circular dangerous area marks 64, which are color-coded in accordance with the danger degrees, are displayed at the corresponding locations on the world map based on the longitudes and latitudes included in the risk information.

For example, in the present embodiment, the danger degrees are classified into three categories, "Information", "Warning", and "Critical", and displayed.

The diameter of each of the dangerous area marks 64 is changed in accordance with an area of the influence range. That is, when the influence range is large, the large circle is displayed. Further, the dangerous area marks 64 are colored with a transparent color assuming that the dangerous area marks 64 overlap each other. When the dangerous area marks 64 overlap, the one having the later occurrence time of the risk information is placed from the top in a descending order of timeline, and then the one having the smaller influence radius is placed from the top in an ascending order. In this manner, even when a plurality of the dangerous area marks 64 overlap on the map, the desired risk information is easily selected. When the dangerous area marks 64 have the same diameter, a function indicating the presence of multiple dangerous area marks 64 is provided, in which, for example, selecting the dangerous area marks 64 displays the dangerous area mark 64 hidden below by switching them.

Note that the diameter of each of the dangerous area marks 64 may be changed in accordance with the danger degrees.

In the present embodiment, when a danger occurs in a region where the traveler stays, the human type icon 63 and the dangerous area mark 64 are placed at approximately the same place while being overlapped with each other, so that they are displayed with good visibility and grasped at a glance. Specifically, the human type icon 63 is superimposed on the circle of the dangerous area mark 64 for display in a manner such that the human type icon 63 is standing on the circle.

In this manner, the manager can confirm at a glance whether the current and past staying locations, as well as the future staying location scheduled in the future, of the traveler are in the dangerous area by looking at the screen. Thus, the manager can be saved the trouble of collating the current and past staying locations, as well as the future staying location scheduled in the future, of the traveler, and the dangerous area indicated by the risk information for confirmation. Further, the staying locations of the traveler can be grasped without omission. Note that the human type icon 63 indicating the past is important to identify the traveler who fails to travel according to the itinerary by missing the transportation and look up a country where an event of a pandemic or the like prevailed in the past.

In the map display where the dangerous area marks 64 and the human type icons 63 are overlapped, when the risk information is generated many times in the same area, it is sometimes not clear to which travelers the alert is distributed by only checking the overlapping with the human type icons 63. Thus, the human type icons 63 indicating the travelers to which the alert is distributed may be emphasized to be grasped at a glance by changing their colors, shapes, etc. Further, when the current location of the traveler is abnormal compared to the itinerary, the corresponding human type icon 63 on the map is distinguishably displayed by changing its color, etc. As the manager side, grasping reception targets is the most important as an initial response for a risk management, and this allows the manager to make a suitable response.

Further, the risk information serves as so-called a risk fence function, in which a content and an instruction content of the risk information to be distributed may be changed according to levels of the danger degrees classified by the distance from the danger occurring location.

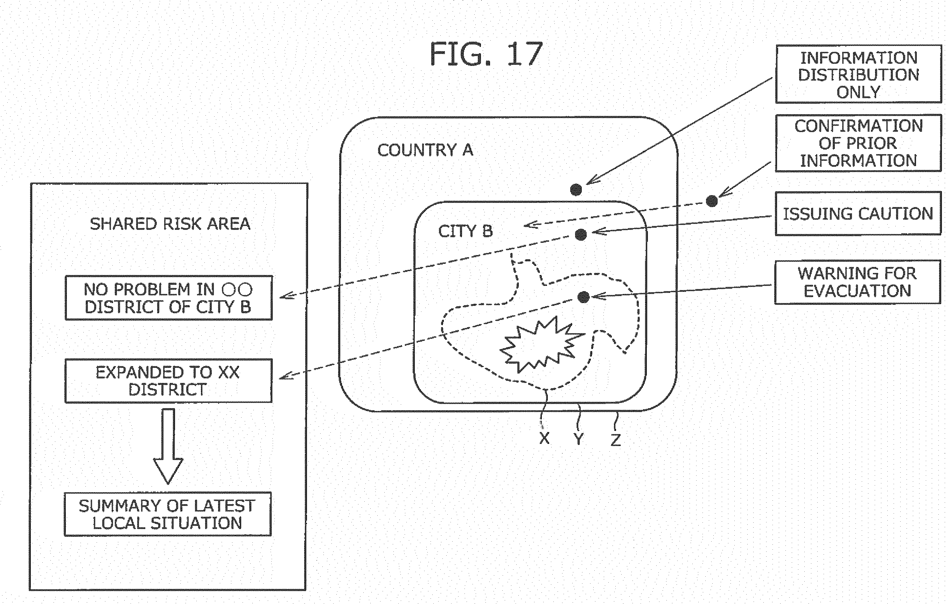

FIG. 17 is an explanatory diagram schematically illustrating the risk fence function. For example, as shown in FIG. 17, the level of the danger degrees is set high in a region X located within a predetermined distance from the danger occurring location and the travelers staying in the region X are recommended for evacuation. Further, in a region Y (e.g. , in city B) expanding from the region X, the level of the danger degrees is slightly lowered to give a caution instead of the evacuation recommendation in a distributed content. Further, in a region Z (e.g., country A) expanding from the region Y, the level of the danger degrees is further lowered to distribute only information in a distributed content. This allows to distribute the necessary risk information corresponding to each traveler more accurately and efficiently. Note that these regions X to Z may be defined by lines freely drawn by freehand on the screen to set a range of the danger area. These regions may be also appropriately changed and updated.

Note that the following functions may be implemented in the present embodiment as other functions.

### (1) Position information correction function

A correction may be made by the following method to grasp the position information of the traveler more accurately. For example, when the position information always differs at the time of staying as compared to the itinerary information or when acquiring data of an acceleration sensor of the portable information terminal 2 determines that there is no movement, a function may be provided to correct that there is no movement. Further, the position information is acquired periodically, for example, every 5 minutes, since the start of the acquisition of the position information to record logs. When a moving distance not possible within a certain period of time is indicated, a correction may be made to use previous point data. Further, the position information may be complemented by referring to use history of a credit card or a use location of an ATM.

### (2) Visiting location notification function

In addition to the portable information terminal 2 of the traveler him/herself, the safety confirmation information may be distributed to the places (a hotel, an airport, an office, etc.) included in the itinerary information. In this case, the confirmation may be substitutionally made by the hotel, etc. As the contact information, a telephone number described in a reservation answer mail or a contact information master of an airport, an office, a hotel, etc., prepared in advance, may be used.

### (3) Emergency substitutional staying location notification function

When the traveler him/herself is unable to notify the staying location, an SOS button that can be easily pushed may be arranged in a program (an application) installed in the portable information terminal 2 to provide a function in which a help notification can be notified to the manager and a support-related company by pushing one button. Further, a message or the like may be sent to the device 1 from a substituting person other than the traveler him/herself by describing a two-dimensional code, an emergency mail address, or the like on a name card or a dedicated card.

### (4) Staying location specific additional information distribution function

According to location information (the longitude and latitude) and the position information included in the itinerary information, necessary information, such as city information of the corresponding location, including daily life information, etc., can be distributed, in addition to danger information. Further, the traveler may take an E-training for each city associated with the itinerary information as prior information on the travel destination.

### (5) Additional information automatic matching function

Categories may be set in the risk information based on the content of the text and keywords, and additional information related to the contents of a demonstration plan, earthquake, a terrorism, etc. may be automatically matched to each category. Further, information on measures against the corresponding risk and advices may be given by an E-learning or the like.

### (6) Others

As a derivative service using the risk information distribution system S, the system can be used for a labor management by confirming working hours and places. Further, the system can be used to manage an improper business trip by confirming whether an employee is actually located according to time and place indicated by the itinerary information.

Note that, in the present embodiment, GMT, the local time, and the work place time are mutually convertible. For example, a user attributed master table (not shown) stores the longitude and latitude of the work place, GMT, and the time difference, and each time is subjected to a master management in the device 1. Needless to say, summer time can be also managed.

In this configuration, accuracy of the local time is improved by sending the longitude and latitude to an external service from the portable information terminal 2 of the traveler to acquire time of the local place. In principle, the traveler receiving the alert uses all kinds of information in which time is converted to the local time as a standard.

A wide-range alert by which multiple cities are influenced is described using GMT as the location cannot be specified.

In a detailed screen, the local time may be individually displayed (or searchable) in each major location. In grasping information on next scheduled destinations involving multiple countries during the travel, it is also effective to grasp the information in which time is converted to the work place time or GMT as a standard.

The manager side responds to an emergency based on the work place time. For example, the manager residing in Japan has Japan time as the work place time, thus the manager confirms the arriving time of the traveler after it is converted from the local time to the Japan time. Similarly, the alert is confirmed in the Japan time after time conversion. Conversely, conversation with the traveler who works in the local office or stays in the local place can be made in the local time after time conversion.

Next, procedures of the risk information distribution processing executed by the device 1 will be explained.

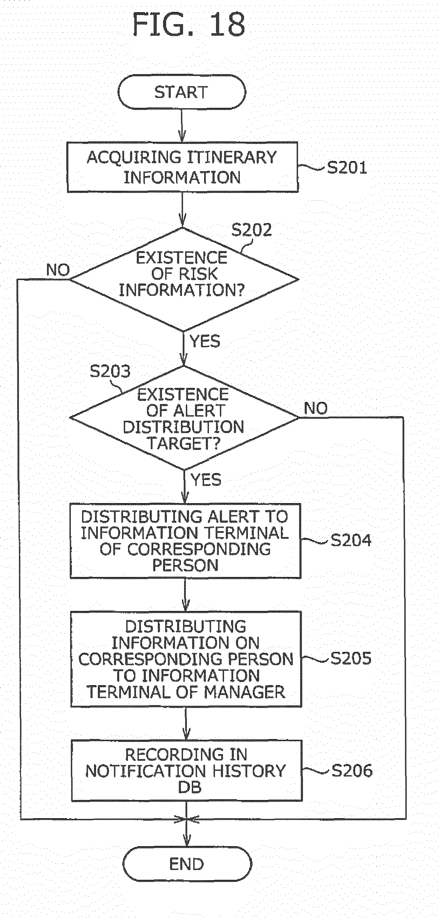

FIG. 18 is a flowchart illustrating the procedures of the risk information distribution processing of the device 1. Specifically, the itinerary information and the risk information are compared to select the traveler to be distributed and the risk information is distributed to the traveler.

First, the itinerary information acquisition processing unit 31 acquires the itinerary information of each traveler and stores it in the itinerary information database 21 (S201) . In this process, for example, the itinerary can be acquired from a link to a server or information terminal of a travel agency, an input from a call center, a link to a reservation site, a reservation answer mail that is shared, an analytic import from a SNS, etc., a CSV import in a specific format, a link to a business trip management system of a company, and the like.

Next, when the risk information is acquired by the risk information acquisition processing unit 32 (S202: YES), it is determined whether there is any traveler who is an alert distribution target, that is, by comparing the items of the longitude and latitude and the effective period included in the risk information stored in the risk information database 22 and the items of the longitude and latitude and the date and time included in the itinerary information stored in the itinerary information database 21, it is determined whether the two longitudes and latitudes are the same or the error between the two longitudes and latitudes is within the predetermined range, and whether the date and time is within the effective period (S203). In this determination process, for example, one method includes a collation between the items of the longitude and latitude and the effective period included in the risk information, and the items of the longitude and latitude and the date and time included in the itinerary information extracted from the itinerary information database 21. Another method is searching the itinerary information having the longitude and latitude which is the same as that of the risk information or of which the error from that of the risk information is within the predetermined range, and having the date and time that is within the effective period of the risk information, in the itinerary information database 21. Both methods may be applied.

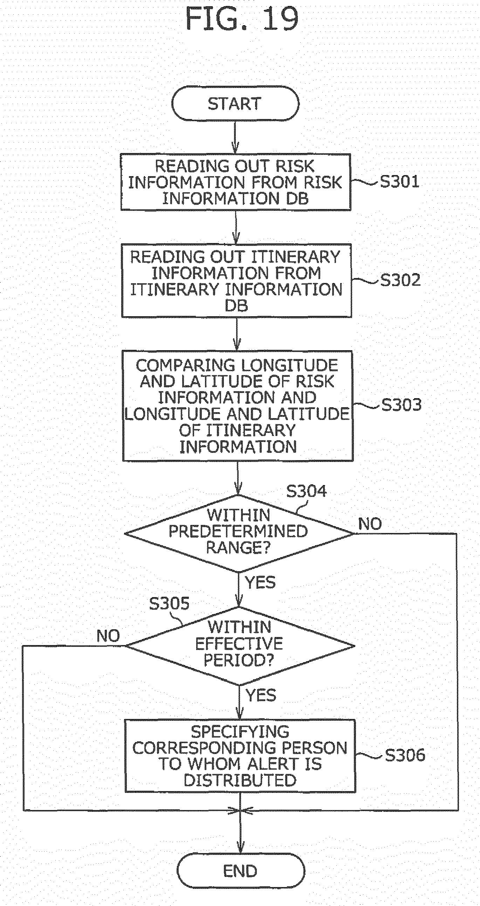

FIG. 19 is a flowchart illustrating procedures of the risk information determination processing for the former case, that is, for the case where the items of the longitude and latitude and the effective period included in the risk information and the items of the longitude and latitude and the date and time included in the itinerary information extracted from the itinerary information database 21 are collated.

First, the risk information is read out from the risk information database 22 (S301) and the itinerary information is read out from the itinerary information database 21 (S302) . Then, the item of the longitude and latitude included in the extracted risk information and the item of the longitude and latitude included in the similarly extracted itinerary information are compared (S303). It is determined whether a numerical error between the compared longitudes and latitudes is within the predetermined range (including an identical case) (S304). If it is determined to be within the predetermined range (S304: YES), it is then determined whether the date and time of the itinerary information is within the effective period of the risk information (S305) . If it is determined to be within the effective period (S305: YES), the traveler corresponding to the itinerary information is specified as an alert distribution destination (S306).

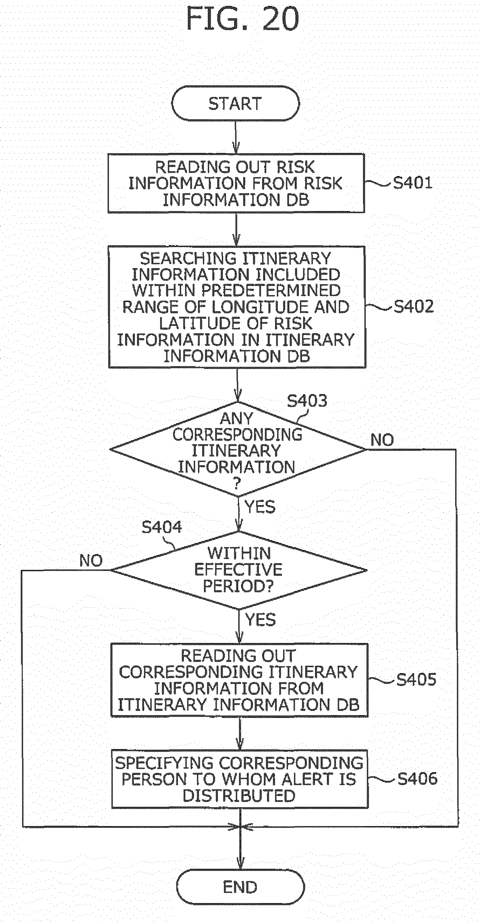

On the other hand, FIG. 20 is a flowchart illustrating procedures of the risk information determination processing for the latter case, that is, for the case where the itinerary information having the longitude and latitude which is the same as that of the risk information or of which the error from that of the risk information is within the predetermined range, and having the date and time that is within the effective period of the risk information, is searched in the itinerary information database 21.

First, the risk information is read out from the risk information database 22 (S401), and then, by referring to the item of the longitude and latitude of the itinerary information stored in the itinerary information database 21, the itinerary information in which a numerical error from the item of the longitude and latitude included in the extracted risk information is within the predetermined range (including an identical case) is searched in the itinerary information database 21 (S402). Then, if the itinerary information satisfying the above condition is found (S403: YES), it is next determined whether the date and time of the itinerary information is within the effective period of the risk information (S404). If it is determined to be within the effective period (S404: YES), the corresponding itinerary information is read out from the itinerary information database 21 (S405) and the traveler corresponding to the itinerary information is specified as the alert distribution destination (S406) .

When the determination processing shown in FIG. 19 or FIG. 20 described above determines the existence of the traveler as the alert distribution target (S203 : YES), the risk information notification processing unit 34 distribute an alert to the portable information terminal 2 of the corresponding person (S204) and the decision result display processing unit 37 distributes information on the corresponding person to the information terminal for manager 3 (S205). Then, history of the alert distribution is recorded in the notification history information database 24 (S206) to complete the risk information distribution processing. Note that when it is determined that there is no traveler as the alert distribution target (S203: NO), that is, there is no itinerary information corresponding to the risk information, the risk information distribution processing is completed as it is.

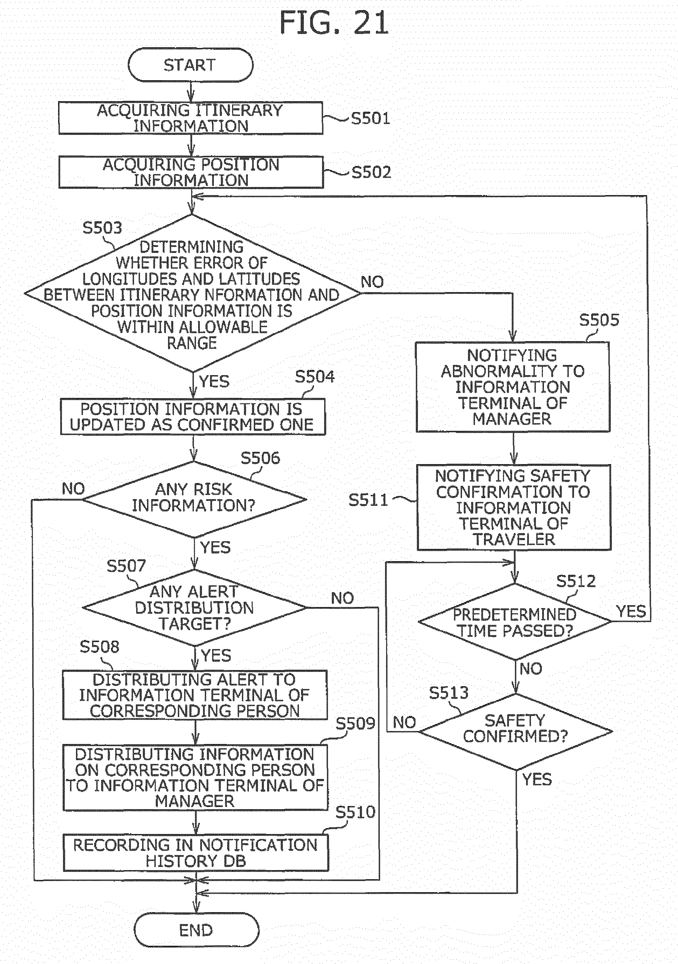

Further, FIG. 21 is a flowchart illustrating procedures of the risk information distribution processing of the device 1. Specifically, the traveler as the distribution destination is selected by collating the position information with the itinerary information and then comparing the position information with the risk information. The risk information is then distributed to the selected traveler.

First, the itinerary information acquisition processing unit 31 acquires the itinerary information of each traveler and stores it in the itinerary information database 21 (S501). Further, the position information acquisition processing unit 35 acquires the position information of the portable information terminal 2 held by each traveler and stores it in the position information database 23 (S502).

Next, the position information collation processing unit 36 compares, for the specific traveler, the item of the longitude and latitude included in the position information stored in the position information database 23 and the item of the longitude and latitude included in the itinerary information stored in the itinerary information database 21 and determines whether the two longitudes and latitudes are the same or the error between the two longitudes and latitudes is within the allowable range (S503).

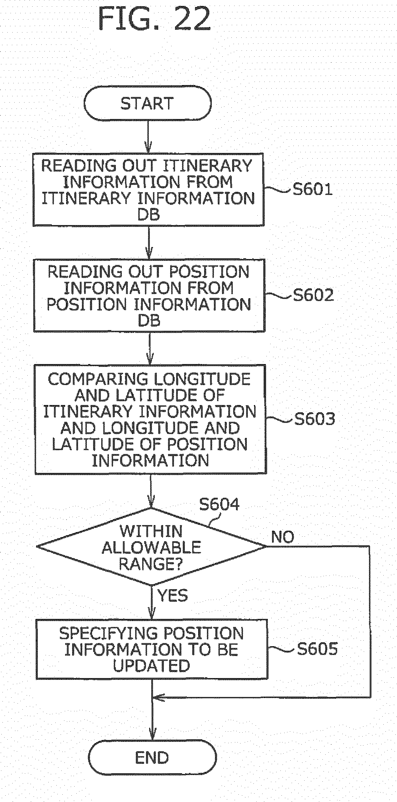

Specifically, as shown in a flowchart illustrating procedures of the risk information collation processing in FIG. 22, first, the itinerary information is read out from the itinerary information database 21 (S601) and the position information is read out from the position information database 23 (S602) . Then, the item of the longitude and latitude included in the extracted itinerary information and the item of the longitude and latitude included in the similarly extracted position information are compared (S603). It is determined whether the numerical error between the compared longitudes and latitudes is within the allowable range (including an identical case) (S604). If it is determined to be within the allowable range (S604 : YES) , it is determined that the position information is consistent with the itinerary information and the position information to be updated is specified (S605).

When the determination processing shown in FIG. 22 above determines that the error of the longitudes and latitudes between the position information and the itinerary information is within the allowable range (S503: YES), the position information is updated as confirmed information (hereinafter, information A) (S504). Note that, in this process, new information may be separately created instead of updating the position information as the confirmed information. On the other hand, when it is determined that the error of the longitudes and latitudes between the position information and the itinerary information is not within the allowable range (S503: NO), the abnormality notification processing unit 38 notifies the abnormality to the information terminal for manager 3 (S505).

Next, under the condition in which it has been determined that the error of the longitudes and latitudes between the position information and the itinerary information is within the allowable range, when the risk information acquisition processing unit 32 acquires the risk information (S506: YES) , it is determined whether there is any traveler who is the alert distribution target, that is, by comparing the items of the longitude and latitude and the effective period of the risk information stored in the risk information database 22 and the items of the longitude and latitude and the date and time included in the itinerary information and the information A stored in the position information database 23, it is determined whether the two longitudes and latitudes are the same or the error between the two longitudes and latitudes is within the predetermined range, and whether the date and time is within the effective period (S507). In this determination process, for example, one method includes a collation between the items of the longitude and latitude and the effective period included in the risk information, and the items of the longitude and latitude and the date and time included in the information A. Another method is searching the information A having the longitude and latitude which is the same as that of the risk information or of which the error from that of the risk information is within the predetermined range, and having the date and time that is within the effective period of the risk information, in the position information database 23. Both methods may be applied.

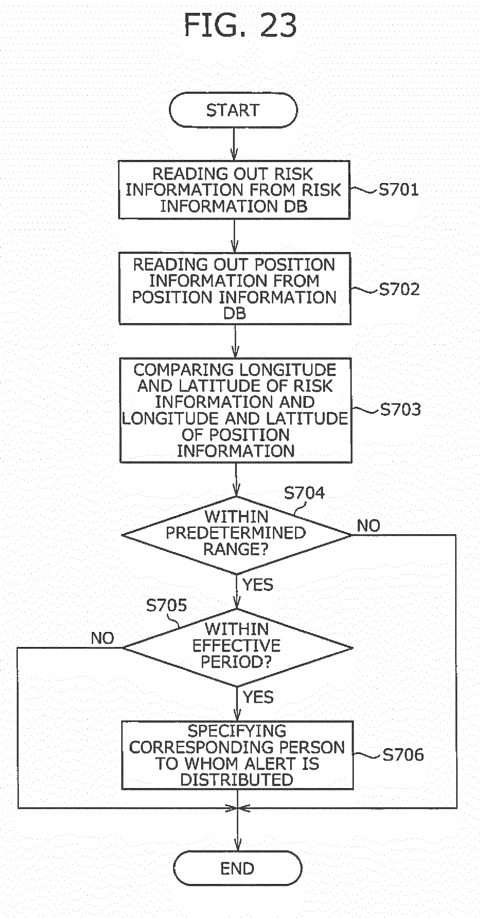

FIG. 23 is a flowchart illustrating procedures of the risk information determination processing for the former case, that is, for the case where the items of the longitude and latitude and the effective period included in the risk information and the items of the longitude and latitude and date and time included in the information A extracted from the position information database 23 are collated.

First, the risk information is read out from the risk information database 22 (S701) and the information A is read out from the position information database 23 (S702). Then, the item of the longitude and latitude included in the extracted risk information and the item of the longitude and latitude included in the similarly extracted information A are compared (S703). It is determined whether the numerical error between the compared longitudes and latitudes is within the predetermined range (including an identical case) (S704). If it is determined to be within the predetermined range (S704: YES), it is next determined whether the date and time of the information A is within the effective period of the risk information (S705). If it is determined to be within the effective period (S705: YES) , the traveler corresponding to the position information is specified as the alert distribution destination (S706).

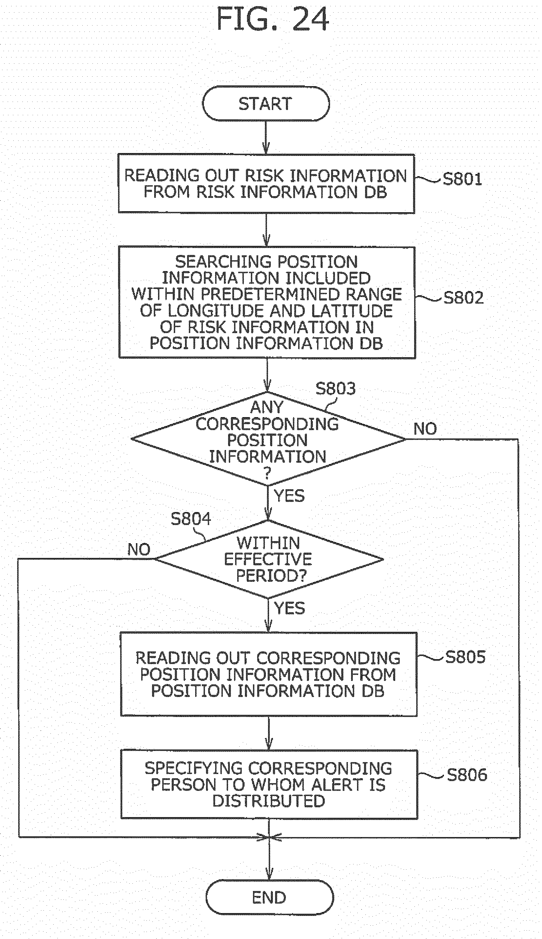

On the other hand, FIG. 24 is a flowchart illustrating procedures of the risk information determination processing for the latter case, that is, for the case where the information A having the longitude and latitude which is the same as that of the risk information or of which the error from that of the risk information is within the predetermined range, and having the date and time that is within the effective period of the risk information, is searched in the position information database 23.

First, the risk information is read out from the risk information database 22 (S801), and then, by referring to the item of the longitude and latitude of the information A stored in the position information database 23, the information A in which the numerical error from the item of the longitude and latitude included in the extracted risk information is within the predetermined range (including an identical case) is searched in the position information database 23 (S802) . Then, if the information A satisfying the above condition is found (S803: YES), it is next determined whether the date and time of the information A is within the effective period of the risk information (S804). If it is determined to be within the effective period (S804: YES), the corresponding information A is read out from the position information database 23 (S805) and the traveler corresponding to the position information is specified as the alert distribution destination (S806).

When the determination processing shown in FIG. 23 or FIG. 24 above determines the existence of the traveler as the alert distribution target (S507: YES), the risk information notification processing unit 34 distributes an alert to the portable information terminal 2 of the corresponding person (S508) and the decision result display processing unit 37 distributes information on the corresponding person to the information terminal for manager 3 (S509). Then, history of the alert distribution is recorded in the notification history information database 24 (S510) to complete the risk information distribution processing. Note that when it is determined that there is no traveler as the alert distribution target (S507: NO), that is, there is no information A corresponding to the risk information, the risk information distribution processing is completed as it is.

On the other hand, when it is determined that the error of the longitudes and latitudes between the position information and the itinerary information is not within the allowable range (S503: NO), the abnormality notification processing unit 38 notifies the abnormality to the information terminal for manager 3 (S505) and next the safety confirmation notification processing unit 39 performs the safety confirmation notification to the portable information terminal 2 of the traveler (S511). Then, until a predetermined time, set in advance, passes (S512: NO), it is determined whether the safety confirmation is acknowledged by receiving a reply or the like from the traveler (S513). If the safety confirmation is acknowledged (S513: YES), the processing is completed. Conversely, when the safety confirmation is not acknowledged (S513: NO) and the predetermined time has passed (S512: YES) , the position information collation processing unit 36 again compares the items of the longitudes and latitudes included in the position information and the itinerary information and determines whether the two longitudes and latitudes are the same or the error between the two longitudes and latitudes is within the allowable range (S503). Then, if it is determined again that the error of the longitudes and latitudes between the position information and the itinerary information is not within the allowable range (S503: NO), the abnormality notification processing unit 38 again notifies the abnormality to the information terminal for manager 3 (S505) and the safety confirmation notification is continuously repeated to the portable information terminal 2 of the traveler as a retry (S511).

Note that, in this process, when it is determined that the error of the longitudes and latitudes between the position information and the itinerary information is within the allowable range (S503: YES), the safety of the traveler is confirmed by concluding that the traveler arrives at an event or a subsequent event indicated by the itinerary information, and a shift is made to processings on and after S504.

Further, in the present embodiment, continuous log monitoring of the position information of the portable information terminal 2 of the traveler is unnecessary, and the logs are appropriately acquired at a predetermined timing according to the itinerary.

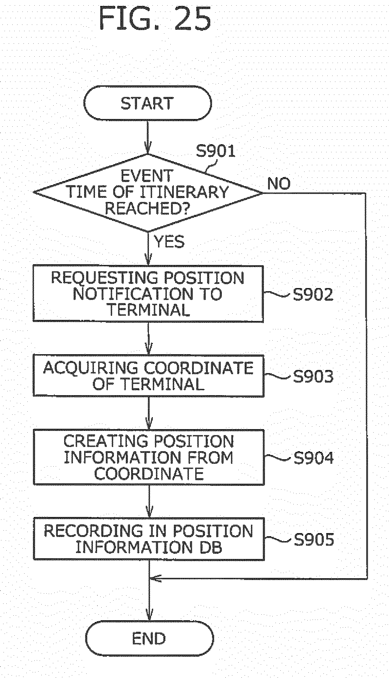

Specifically, as shown in a flowchart illustrating procedures of the position information acquisition processing in FIG. 25, it is determined whether the occurrence time zone of an event (several minutes before and after scheduled time of an event) registered in the itinerary information is reached (S901). If the event time is reached (S901: YES), position notification request is made to the portable information terminal 2 (S902), a coordinate of the portable information terminal 2 is acquired (S903), the position information is created from the acquired coordinate (S904), and the created position information is recorded in the position information database 23 (S905). On the other hand, if the event time is not reached (S901: NO), the processing is completed without acquiring the position information of the portable information terminal 2.

In the embodiment described above, the risk information distribution device and risk information distribution method of the present invention are mainly described. However, the embodiment as described above is merely an example for facilitating the understanding of the present invention and is not intended to limit the present invention. It shall be apparent that the present invention may be modified or improved without departing from the scope thereof, and that the present invention includes equivalents thereof.

### REFERENCE SIGNS LIST

1: Device (risk information distribution device)
2: Portable information terminal
3: Information terminal for manager
4: Itinerary information server
5: Danger information server
11: CPU
12: ROM
13: RAM
14: Communication interface
15: Hard disk drive
16: Input device
17: Output device
21: Itinerary information database
22: Risk information database
23: Position information database
24: Notification history information database
31: Itinerary information acquisition processing unit
32: Risk information acquisition processing unit
33: Risk information determination processing unit
34: Risk information notification processing unit
35: Position information acquisition processing unit
36: Position information collation processing unit
37: Decision result display processing unit
38: Abnormality notification processing unit
39: Safety confirmation notification processing unit
40: Position information confirmation processing unit
41: Itinerary information database
51: Danger information database
61: Various information display area
   61a: Risk information display field
   61b: Traveler information display field
   61c: Alert distribution history display field
   61d: Local information display field
   61e: Inter-company information display field
62: Map display area
63: Human type icon
64: Dangerous area mark
S: Risk information distribution system
NT: External communication network

## Claims

1. A risk information distribution device configured from a computer that is communicatively connected to an information terminal and includes at least a storage unit and an arithmetic unit, wherein the computer includes:
an itinerary information storage section that stores, in the storage unit, itinerary information in which an itinerary of a traveler is created or acquired from an outside and a longitude and latitude are imparted to each event included in the itinerary;
a risk information storage section that stores, in the storage unit, risk information in which danger information including information on public safety or a disaster is acquired from an outside and the longitude and latitude are imparted to the danger information;
a risk information determining section that compares the longitude and latitude of the itinerary information and the longitude and latitude of the risk information and determines whether the two longitudes and latitudes are the same or an error between the two longitudes and latitudes is within a range of a predetermined distance preset for each of the risk information; and
a risk information notifying section that notifies a content indicated by the risk information to the information terminal held by the traveler associated with the corresponding itinerary information, when the risk information determining section determines the existence of the itinerary information having the longitude and latitude which is the same as that of the risk information or of which the error from that of the risk information is within the predetermined distance range.

2. The risk information distribution device according to claim 1, wherein the computer further includes:
a position information acquiring section that acquires position information indicating the longitude and latitude of the information terminal held by the traveler in an occurrence time zone of the event and stores the position information in the storage unit; and
a position information collating section that compares the longitude and latitude in the occurrence time zone of the event, included in the corresponding itinerary information, and the longitude and latitude of the position information, and determines whether the two longitudes and latitudes are the same or the error between the two longitudes and latitudes is within a range of a preset allowable distance, and
when the position information collating section determines that the itinerary information has the same longitude and latitude as that of the position information or the error between the two longitudes and latitudes is within the allowable distance range, the risk information determining section compares the longitude and latitude of the itinerary information or the position information and the longitude and latitude of the risk information, and determines whether the two longitudes and latitudes are the same or the error between the two longitudes and latitudes is within the predetermined distance range.

3. The risk information distribution device according to claim 1 or 2, wherein the risk information storage section, upon acquiring the danger information, collates a content of the danger information and the content of the risk information stored in the storage unit, and rewrites and stores the risk information when the contents of specific items included in the danger information and the risk information are different.

4. The risk information distribution device according to any one of claims 1 to 3, wherein:
the risk information includes an item indicating an effective period of the risk information, and
the risk information determining section determines whether date and time indicated by the itinerary information is within the effective period.

5. The risk information distribution device according to any one of claims 1 to 4, wherein:
the information terminal includes an information terminal for manager operated by a manager;
the computer further includes a management information sending section that sends at least information for identifying the traveler, the itinerary information, and the risk information to the information terminal for manager; and
the management information sending section displays:
a traveler mark indicating a staying location of the traveler, which is specified based on the longitude and latitude included in the itinerary information, in a manner that can distinguish among past, present, and future; and
a dangerous area mark indicating a dangerous area specified based on the longitude and latitude included in the risk information in a manner that can distinguish among danger levels on a map displayed on a screen of the information terminal for manager.

6. The risk information distribution device according to claim 5, wherein, when the risk information determining section determines that the itinerary information has the same longitude and latitude as that of the risk information or the error between the two longitudes and latitudes is within the predetermined distance range, the management information sending section displays the traveler mark and the dangerous area mark in an approximately same area of the map in an overlapping manner.

7. The risk information distribution device according to claim 5 or 6, wherein the risk information notifying section indicates the traveler mark in a manner that distinguishes the traveler who has been notified with the content indicated by the risk information and the traveler who has not been notified.

8. The risk information distribution device according to any one of claims 5 to 7, wherein the management information sending section collectively sends multiple pieces of information for each period divided by a predetermined time.

9. The risk information distribution device according to claim 2, wherein:
the information terminal includes the information terminal for manager operated by the manager; and
when the position information collating section determines that the longitude and latitude of the itinerary information is not the same as that of the position information or the error between the two longitudes and latitudes is not within the allowable distance range, the computer further includes:
an abnormality notifying section that sends information for identifying the traveler associated with the corresponding itinerary information to the information terminal for manager; and
a safety confirmation notifying section that sends information for confirming safety to the information terminal held by the traveler associated with the corresponding itinerary information or other information terminal associated with the traveler.

10. The risk information distribution device according to claim 9, wherein the abnormality notifying section collectively sends multiple pieces of information for each period divided by a predetermined time.

11. A risk information distribution method executed by a computer that is communicatively connected to an information terminal and includes at least a storage unit and an arithmetic unit, wherein the computer executes:
an itinerary information storage step for storing, in the storage unit, itinerary information in which an itinerary of a traveler is created or acquired from an outside and a longitude and latitude are imparted to each event included in the itinerary;
a risk information storage step for storing, in the storage unit, risk information in which danger information including information on public safety or a disaster is acquired from an outside and the longitude and latitude are imparted to the danger information;
a risk information determining step for comparing the longitude and latitude of the itinerary information and the longitude and latitude of the risk information and determining whether the two longitudes and latitudes are the same or an error between the two longitudes and latitudes is within a range of a predetermined distance preset for each of the risk information; and
a risk information notifying step for notifying a content indicated by the risk information to the information terminal held by the traveler associated with the corresponding itinerary information, when the risk information determining step determines the existence of the itinerary information having the longitude and latitude which is the same as that of the risk information or of which the error from that of the risk information is within the predetermined distance range.

12. The risk information distribution method according to claim 11, wherein the computer further executes:
a position information acquiring step for acquiring position information indicating the longitude and latitude of the information terminal held by the traveler in an occurrence time zone of the event and storing the position information in the storage unit; and
a position information collating step for comparing the longitude and latitude in the occurrence time zone of the event, included in the corresponding itinerary information, and the longitude and latitude of the position information, and determining whether the two longitudes and latitudes are the same or the error between the two longitudes and latitudes is within a range of a preset allowable distance, and
when the positional information collating step determines that the itinerary information has the same longitude and latitude as that of the position information or the error between the two longitudes and latitudes is within the allowable distance range, the risk information determining step compares the longitude and latitude of the itinerary information or the position information and the longitude and latitude of the risk information, and determines whether the two longitudes and latitudes are the same or the error between the two longitudes and latitudes is within the predetermined distance range.

13. The risk information distribution method according to claim 11 or 12, wherein the risk information storage step, upon acquiring the danger information, collates a content of the danger information and the content of the risk information stored in the storage unit, and rewrites and stores the risk information when the contents of specific items included in the danger information and the risk information are different.

14. The risk information distribution method according to any one of claims 11 to 13, wherein:
the risk information includes an item indicating an effective period of the risk information, and
the risk information determining step determines whether date and time indicated by the itinerary information is within the effective period.

15. The risk information distribution method according to any one of claims 11 to 14, wherein:
the information terminal includes an information terminal for manager operated by a manager;
the computer further executes a management information sending step for sending at least information for identifying the traveler, the itinerary information, and the risk information to the information terminal for manager; and
the management information sending step displays:
a traveler mark indicating a staying location of the traveler, which is specified based on the longitude and latitude included in the itinerary information, in a manner that can distinguish among past, present, and future; and
a dangerous area mark indicating a dangerous area specified based on the longitude and latitude included in the risk information in a manner that can distinguish among danger levels on a map displayed on a screen of the information terminal for manager.

16. The risk information distribution method according to claim 15, wherein, when the risk information determining step determines that the itinerary information has the same longitude and latitude as that of the risk information or the error between the two longitudes and latitudes is within the predetermined distance range, the management information sending step displays the traveler mark and the dangerous area mark in an approximately same area of the map in an overlapping manner.

17. The risk information distribution method according to claim 15 or 16, wherein the risk information notifying step indicates the traveler mark in a manner that distinguishes the traveler who has been notified with the content indicated by the risk information and the traveler who has not been notified.

18. The risk information distribution method according to any one of claims 15 to 17, wherein the management information sending step collectively sends multiple pieces of information for each period divided by a predetermined time.

19. The risk information distribution method according to claim 12, wherein:
the information terminal includes the information terminal for manager operated by the manager; and
when the position information collating step determines that the longitude and latitude of the itinerary information is not the same as that of the position information or the error between the two longitudes and latitudes is not within the allowable distance range, the computer further executes:
an abnormality notifying step for sending information for identifying the traveler associated with the corresponding itinerary information to the information terminal for manager; and
a safety confirmation notifying step for sending information for confirming safety to the information terminal held by the traveler associated with the corresponding itinerary information or other information terminal associated with the traveler.

20. The risk information distribution method according to claim 19, wherein the abnormality notifying step collectively sends multiple pieces of information for each period divided by a predetermined time.
